# EUROPÄISCHE PATENTSCHRIFT

(11) **EP 2 764 479 B1**
(45) Veröffentlichungstag und Bekanntmachung des Hinweises auf die Patenterteilung: **06.09.2017**
(21) Anmeldenummer: 12769934.6
(22) Anmeldetag: 04.10.2012
(51) Int. Cl.: G06Q 30/06, G06Q 20/32, G06Q 20/34, H04B 5/00

(54) **TRANSAKTIONSSYSTEM**
TRANSACTION SYSTEM
SYSTEME DE TRANSACTION

(30) Priorität: 06.10.2011 DE 102011114989
(43) Veröffentlichungstag der Anmeldung: 13.08.2014
(73) Patentinhaber: Giesecke+Devrient Mobile Security GmbH, 81677 München (DE)
(72) Erfinder: RANKL, Wolfgang, 81825 München (DE); FINKENZELLER, Klaus, 85774 Unterföhring (DE)
(86) Internationale Anmeldenummer: PCT/EP2012/004157
(87) Internationale Veröffentlichungsnummer: WO 2013/050152

(56) Entgegenhaltungen:
- US-A1- 2008 058 014
- US-A1- 2008 128 513
- US-A1- 2009 070 272
- US-A1- 2009 143 104

## Beschreibung

Die vorliegende Erfindung betrifft ein Verfahren zum Durchführen einer Transaktion mit einer kontaktlos kommunizierenden Terminaleinrichtung sowie ein entsprechendes Transaktionssystem und zugehörige Komponenten.

Transaktionssysteme, welche auf kontaktlosem Weg verschiedene Transaktionen unterstützen, beispielsweise bargeldlose Bezahlung, Ticketing-Anwendungen, Zugangskontrolle oder dergleichen, sind weithin bekannt. Dabei wird die Transaktion in der Regel zwischen einer kontaktlos kommunizierenden Terminaleinrichtung und einem kontaktlos kommunizierenden portablen Datenträger eines Nutzers, beispielsweise einer Chipkarte, durchgeführt. Gelegentlich ist es bereits möglich, dass eine ansonsten auf einer Chipkarte ausgeführte Transaktionsapplikation auf einem Sicherheitselement eines Mobilfunkendgerät installiert werden kann. Das Mobilfunkendgerät unterstützt in diesem Fall eine kontaktlose Datenkommunikation mit der Terminaleinrichtung, beispielsweise mittels eines so genannten CLFs ("Contactless Frontend"). Grundlage bilden dabei bekannte kontaktlose Datenübertragungsprotokolle, wie z.B. gemäß ISO/IEC 14443 (kontaktlose Chipkarte) oder das NFC-Protokoll ("Near Field Communication") gemäß ISO/IEC 18092 (NFCIP-1) oder ISO/IEC 21481 (NFCIP-2) im Zusammenhang mit NFC-fähigen Mobilfunkendgeräten oder dergleichen.

Nachteilig für einen Nutzer ist es dabei jedoch, dass zumeist für jede Anwendung eine eigene Terminaleinrichtung vorgesehen ist, welche ihrerseits einen zugehörigen, eigenen Datenträger - im Falle einer Chipkarte - oder zumindest eine entsprechende eigene Transaktionsapplikation - im Falle eines NFC-fähigen Mobilfunkendgeräts - erfordert. Der Nutzer muss also, möchte er verschiedene Transaktionen durchführen, den jeweils passenden portablen Datenträger mit sich führen oder zumindest zuerst die passende Transaktionsapplikation auf dem Sicherheitselement seines Mobilfunkendgerätes installieren. Die Anzahl notwendiger Chipkarten steigt dabei schnell. Eine Installation von diversen Transaktionsapplikationen erfordert zumindest einigen Aufwand und führt auch hier schnell zu einer unübersichtlich großen Anzahl. Weiterhin ist die Installation zumeist im Vorfeld durchzuführen, d.h. nicht erst in dem Moment, in dem der Nutzer die Applikation gerne verwenden möchte, um beispielsweise in einer fremden Stadt eine U-Bahn zu benutzen. Schließlich ist es erforderlich, falls eine Transaktionsapplikation auf einem Datenträger eine Bezahltransaktion unterstützen soll, dass jeweils ausreichend Guthaben auf dem entsprechenden Datenträger gespeichert ist. Soll eine Bezahlung per Rechnung erfolgen, so wäre sogar vorab ein Vertrag zwischen Nutzer und Anbieter abzuschließen.

US 2009 0143104 zeigt eine NFC-Einheit, die in einem Bezahlsystem entweder als Terminal oder als Karte agiert. In US 2009 070272 wird eine Mikro-SD-Karte mit NFC-Schnittstelle nachträglich als Transaktionseinheit personalisiert. US 2008 0128513 schlägt eine Datenstruktur in einer kontaktlosen Transaktionseinheit vor, um unterschiedliche Transaktionstypen mit entsprechenden Terminals zu unterstützen. Für einen neuen Transaktionstyp können neue Daten über ein Terminal in die Datenstruktur geladen werden. US 2008 0058014 beschreibt ein System zum Nachladen einer Transaktionsapplikation auf ein Mobilfunkgerät, wobei für jeden Transaktionstyp eine Transaktionsapplikation nachgeladen wird.

Aufgabe der vorliegenden Erfindung ist es demnach, ein Transaktionssystem und ein Verfahren vorzuschlagen, welches den angesprochenen Nachteilen Rechnung trägt und dabei insbesondere ein Nachladen einer Transaktionsapplikation für jeden Transaktionstyp vermeidet.

Diese Aufgabe wird durch den Gegenstand der unabhängigen Ansprüche gelöst. Vorteilhafte Ausgestaltungen und Weiterbildungen sind in den abhängigen Ansprüchen angegeben.

Ein Transaktionssystem umfasst eine kontaktlos im Nahbereich kommunizierende Terminaleinrichtung, ein Weiterleitungsendgerät, eine Servereinrichtung und eine entfernt von der Terminaleinrichtung angeordnete Transaktionseinheit. Die Terminaleinrichtung ist eingerichtet Transaktionen mit im Nahbereich angeordneten Transaktionspartnern durchzuführen. Das Weiterleitungsendgerät ist eingerichtet, eine kontaktlose Datenkommunikation mit der Terminaleinrichtung aufzubauen und von der Terminaleinrichtung empfangene Transaktionsdaten an die entfernt angeordnete Transaktionseinheit weiterzuleiten. Die Servereinrichtung ist eingerichtet, dem Weiterleitungsendgerät als Transaktionspartner für die Terminaleinrichtung abhängig vom Transaktionstyp die Transaktionseinheit zu vermitteln. Die Servereinrichtung vermittelt abhängig vom Transaktionstyp entsprechend unterschiedliche Transaktionseinheiten (und für die Transaktion mit der Terminaleinrichtung die genannte Transaktionseinheit). Entsprechend sieht die Servereinrichtung für jeden Transaktionstyp zumindest eine Transaktionseinheit vor. Ist die Transaktion von einem ersten Transaktionstyp vermittelt die Servereinrichtung dem Weiterleitungsendgerät also eine erste Transaktionseinheit, ist die Transaktion dagegen von einem zweiten Transaktionstyp vermittelt die Servereinrichtung dem Weiterleitungsendgerät eine zweite Transaktionseinheit.

Sie ist insbesondere eingerichtet aus einer Vielzahl von Transaktionseinheiten die Transaktionseinheit auszuwählen. Für jeden Transaktionstyp ist dabei zumindest eine Transaktionseinheit vorgesehen. Der Schritt des Auswählens umfasst eine Auswahl abhängig vom Transaktionstyp. Zudem kann die Transaktionseinheit aus den für den Transaktionstyp vorgesehenen Transaktionseinheiten ausgewählt werden.

Der Transaktionstyp wird von der Terminaleinrichtung vorgegeben. Entweder die Terminaleinrichtung unterstützt nur einen Transaktionstyp oder sie überträgt den vorgegebenen Transaktionstyp an das Weiterleitungsendgerät. Die Servereinrichtung speichert für Transaktionseinheiten verschiedene Registrierungsdaten. Insbesondere speichert sie welcher Transaktionstyp von der Transaktionseinheit unterstützt wird und mit welcher Adresse eine Datenkommunikationsverbindung (über ein Netzwerk) zu der Transaktionseinheit aufgebaut werden kann.

Das Vermitteln der Transaktionseinheit kann erfolgen durch Aufbauen einer Datenkommunikationsverbindung zu der Transaktionseinheit (mit Hilfe der Adresse) und durch Weiterleiten von Transaktionsdaten von dem Weiterleitungsendgerät über die Servereinrichtung zu der Transaktionseinheit. Alternativ kann das Vermitteln durch Übertragen der Datenkommunikationsadresse der Transaktionseinheit an das Weiterleitungsendgerät erfolgen.

Die Transaktion, die nicht im Nahbereich erfolgt, sondern deren Transaktionsdaten an eine entfernt angeordnete Transaktionseinheit weitergeleitet wird, wird auch als weitergeleitete Transaktion bezeichnet. Die Servereinrichtung kann in einer Ausgestaltung selbst Transaktionseinheiten für unterschiedliche Transaktionstypen umfassen. Die weitergeleitete Transaktion wird vorteilhaft mit einer der Transaktionseinheiten der Servereinrichtung durchgeführt. Insbesondere wenn herkömmliche kontaktlose portable Datenträger als Transaktionseinheiten der Servereinrichtung dienen, ist die Servereinrichtung effektiv bereitzustellen.

Im Rahmen des beschriebenen Transaktionssystems kann es vorgesehen sein, dass sich ein Weiterleitungsendgerät und/oder eine Transaktionseinheit jeweils einmalig bei der Servereinrichtung registrieren. Das jeweilige Gerät (bzw. die Einheit) überträgt bei der Registrierung bei der Servereinrichtung beispielsweise eine eindeutige Kennung an die Servereinrichtung, mittels derer im Folgenden das jeweilige Gerät (bzw. die Einheit) identifiziert oder adressiert werden kann. Als Kennung kann beispielsweise eine Mobilfunknummer, eine Netzwerkadresse (z. b. eine IP-Adresse), ein Account oder dergleichen verwendet werden.

Während der Registrierung kann beispielsweise bereits festgelegt werden, welches Weiterleitungsendgerät, ggf. über die Servereinrichtung, zum nachfolgenden Durchführen einer Transaktion mit welcher/n Transaktionseinheit/en potentiell verbunden werden kann oder soll. Wird eine solche Paarung von Weiterleitungsendgerät und Transaktionseinheit in dieser Phase gebildet, kann die Servereinrichtung dem Weiterleitungsendgerät bereits zu diesem Zeitpunkt Daten betreffend das Transaktionseinheit bereitstellen, welche das Weiterleitungsendgerät später beim Aufbauen einer Datenkommunikationsverbindung mit der Terminaleinrichtung verwenden kann.

Es ist ferner vorteilhaft wenn die Servereinrichtung für Transaktionseinheiten speichert, welchen Weiterleitungsendgeräten die Transaktionseinheit vermittelt werden darf. Solche Vorgaben des Besitzers der Transaktionseinheit erlauben es beispielsweise, die weitergeleitete Transaktion nicht zusätzlich abrechnen zu müssen. Der Besitzer (Vater, Abteilungsleiter) einer Transaktionseinheit (mit Anwendung: Streifenkarte oder Geldbörse) gibt bei der Registrierung an, welche Weiterleitungsendgeräte eines Personenkreises (Familie, Abteilung) weitergeleitete Transaktionen mit der Transaktionseinheit (kostenfrei) ausführen dürfen.

Als Transaktionssubsystem kann, zur Abgrenzung gegenüber dem vorliegenden Transaktionssystem, das (an sich vollständige) Transaktionssystem des vorgegebenen Transaktionstyps bezeichnet. Jedes Transaktionssubsystem besteht aus einer Vielzahl von Terminaleinrichtungen und Transaktionseinheiten sowie einer Abrechnungseinheit. Das vorliegende Transaktionssystem muss kein Meta-System für die Transaktionssubsysteme sein, braucht also keine Kenntnis über deren Aufbau und benötigt keine Schnittstellen in die Subsysteme. Es kann als ein selbständiges Transaktionssystem betrieben werden, welches den Anwendungsbereich der Transaktionssubsysteme erweitert.

Die Servereinrichtung kann eine Abrechnungsausgleichseinheit umfassen. Die weitergeleitete Transaktion löst im Transaktionssubsystem eine Abrechnung zwischen dem Terminalbetreiber und dem Besitzer der Transaktionseinheit aus. Die Abrechnungsausgleichseinheit löst nun ihrerseits eine Abrechnung zulasten des Benutzers des Weiterleitungsendgerätes aus. Es ist denkbar, dass eine Abrechnung für den Benutzer des Weiterleitungsendgeräts direkt gegenüber dem Besitzer der Transaktionseinheit erfolgt. Wesentlich eleganter und anonymer ist es jedoch eine getrennte Abrechnung zwischen dem Benutzer des Weiterleitungsendgeräts und dem Betreiber des vorliegenden Transaktionssystems sowie zwischen dem Betreiber des vorliegenden Transaktionssystems und dem Besitzer der Transaktionseinheit auszulösen.

Die Servereinrichtung stellt dem (den) Weiterleitungsendgerät(en) Transaktionsinitialisierungsdaten bereit. Transaktionsinitialisierungsdaten können beispielsweise Weiterleitungsinformationen, einen Identifikator (AIDs) des unterstützten Transaktionstyps und / oder eine Adresse der Transaktionseinheit für den Transaktionstyp umfassen.

Auf diese Weise wird das Weiterleitungsendgerät in gewisser Weise multiapplikationsfähig, ohne dass eine einzige Transaktionsapplikation auf dem Weiterleitungsendgerät installiert sein müsste. Die Transaktionsapplikation selbst wird durch die entfernte Transaktionseinheit bereitgestellt. Der Terminaleinrichtung gegenüber scheint das Weiterleitungsendgerät jeweils eingerichtet, eine vorgegebene Transaktionsapplikation auszuführen. Einem Nutzer des Weiterleitungsendgeräts steht damit eine Vielzahl von Transaktionsapplikationen zum Durchführen verschiedenster Anwendungen über das einfach mittels einer Weiterleitungsapplikation ausgestattete Weiterleitungsendgerät in Verbindung mit der Servereinrichtung zur Verfügung.

Eine erfindungsgemäße Servereinrichtung umfasst entsprechend eine Datenkommunikationsschnittstelle zur Datenkommunikation mit dem Weiterleitungsendgerät und ist eingerichtet, dem Weiterleitungsendgerät transaktionsabhängige Transaktionsinitialisierungsdaten bereitzustellen.

Die Servereinrichtung bestimmt den Transaktionstyp vorzugsweise anhand einer vom Weiterleitungsendgerät empfangenen Information. Die Information kann beispielsweise ein Anwendungsidentifikator (AID) oder eine Positionsinformation (Nummer einer Mobilfunkzelle, GPS-Daten, ...) sein. Die Servereinrichtung kann den Transaktionstyp anhand einer (vom Weiterleitungsendgerät empfangenen oder anderweitig ermittelten) Positionsinformation, welche die Position des Weiterleitungsendgerätes angibt, bestimmen. Das Weiterleitungsendgerät ist eingerichtet, eine Identifikationsinformation, welche eine Transaktionsapplikation betrifft, an die Servereinrichtung weiterzuleiten.

Die Servereinrichtung kann dem Weiterleitungsendgerät falls erforderlich transaktionsabhängige Transaktionsinitialisierungsdaten bereitstellen. Dies kann in einem vorgelagerten Schritt erfolgen, beispielsweise während einer vorstehend beschriebenen Registrierungsphase. Vorzugsweise in der Initialisierungsphase wird zumindest ein Teil der Transaktionsinitialisierungsdaten von dem Weiterleitungsendgerät an die Terminaleinrichtung übertragen. Die Transaktionsinitialisierungsdaten können dabei z.B. ein eindeutiges Identifikationsdatum einer Transaktionseinheit, an welches das Weiterleitungsendgerät die mit der Terminaleinrichtung aufgebaute Datenkommunikation weiterleitet, oder des Weiterleitungsendgeräts selbst, umfassen. Alternativ oder zusätzlich können auch von der Transaktionseinheit abhängige Transaktionsparameter Teil der Transaktionsinitialisierungsdaten sein. Diese Transaktionsparameter betreffen in der Regel die Transaktionseinheit, an welche das Weiterleitungsendgerät die mit der Terminaleinrichtung aufgebaute Kommunikationsverbindung weiterleitet.

Diese Transaktionsinitialisierungsdaten können die Weiterleitungsinformation umfassen. Dazu kann beispielsweise ein spezifischer Wertebereich von Kennungen - entsprechend dem Identifikationsdatum - für Weiterleitungsendgeräte reserviert sein. Eine Terminaleinrichtung, welcher der entsprechende Wertebereich bekannt ist, kann ein Weiterleitungsendgerät somit bereits an seinem eindeutigen Identifikationsdatum als zum Weiterleiten von Transaktionsdaten eingerichtetes Endgerät erkennen. Es ist auch möglich, dass Datensätze, welche zum Codieren herstellerspezifischer Parameter von Transaktionseinheiten vorgesehen sind, eine Weiterleitungsinformation umfassen.

Das Weiterleitungsendgerät umfasst eine Datenkommunikationsschnittstelle zur kontaktlosen Datenkommunikation im Nahbereich mit der Terminaleinrichtung sowie eine Datenkommunikationsschnittstelle zur Datenkommunikation mit der Servereinrichtung. Das Weiterleitungsendgerät umfasst eine Weiterleitungsapplikation, welche eingerichtet ist die Transaktionsdaten an die Transaktionseinheit zu übertragen. Die Weiterleitungsapplikation wird dem Weiterleitungsendgerät bevorzugt durch die Servereinrichtung bereitgestellt.

Als Weiterleitungsendgerät kann beispielsweise ein Lesegerät für kontaktlose und oder kontaktbehaftete Chipkarten, ein Mobilfunkendgerät, ein Smartphone, ein Notebook oder dergleichen verwendet werden. Die Transaktionsdaten werden über ein Netzwerk (Internet, Mobilfunknetz, LAN, ...) weitergeleitet. Die Datenkommunikation zwischen dem Weiterleitungsendgerät und der Servereinrichtung, zwischen dem Weiterleitungsendgerät und der Transaktionseinheit und/ oder zwischen der Servereinrichtung und der Transaktionseinheit kann über ein geeignetes Kommunikationsnetzwerk, z.B. ein Mobilfunknetz, das Internet oder dergleichen erfolgen. Die Datenkommunikation zwischen der Terminaleinrichtung und dem Weiterleitungsendgerät ist eine kontaktlose (Nahbereichs-)Datenkommunikation im Nahbereich der Terminaleinrichtung. Diese Datenkommunikation erfolgt in der Regel über eines der vorstehend genannten, bekannten kontaktlosen Datenübertragungsprotokolle, wie beispielsweise ISO/IEC 14443, ISO/IEC 18092 (NFCIP-1) oder ISO/IEC 21481 (NFCIP-2).

Das Weiterleitungsendgerät kann die Transaktion abhängig vom Transaktionstyp als weiterleitende Einheit oder als Transaktionseinheit durchführen. Insbesondere ist das Weiterleitungsendgerät eingerichtet, um Transaktionen unterschiedlicher Transaktionstypen als weiterleitende Einheit durchzuführen.

Zwei große Vorteile des Transaktionssystems sind seine Flexibilität und seine Rückwärtskompatibilität. Der Austausch der Transaktionsdaten mit dem Weiterleitungsendgerät erfolgt gemäß einem vorgegeben Ablauf für im Nahbereich angeordnete Transaktionseinheiten. Weder die Terminaleinrichtung noch die Transaktionseinheit bedürfen unbedingt einer Anpassung.

Vielmehr soll der Austausch der Transaktionsdaten dem vorgegeben Ablauf weiter folgen, auch wenn eine Weiterleitung stattfindet. Wenn die Terminaleinrichtung das Weiterleitungsendgerät anhand der Weiterleitungsinformation als weiterleitende Einheit erkennt, wird daher ein entsprechender Vorbereitungsschritt in der Terminaleinrichtung vor dem Austausch der Transaktionsdaten durchgeführt.

Das Transaktionssystem umfasst in der Regel eine Mehrzahl von Weiterleitungsendgeräten, eine Mehrzahl von - auch unterschiedlichen - Terminaleinrichtungen sowie gegebenenfalls eine Mehrzahl von Transaktionseinheiten, welche wiederum jeweils selbst eingerichtet sein können, eine Mehrzahl von Transaktionsapplikationen auszuführen.

Die Terminaleinrichtung ist grundsätzlich eingerichtet, eine Transaktion mit einer Transaktionseinheit durchzuführen. Dazu wird eine kontaktlose Datenkommunikation zwischen der Terminaleinrichtung und der Transaktionseinheit aufgebaut. Diese Datenkommunikation kann, wie bereits angedeutet und nachstehend detailliert beschrieben, über verschiedene weitere Komponenten des Transaktionssystems weitergeleitet und vermittelt werden.

Die Transaktionseinheit erzeugt für die Durchführung der Transaktion nötige Transaktionsdaten. Sie ist eingerichtet, eine Transaktionsapplikation auszuführen, die einem durch die Terminaleinrichtung vorgegebenen Transaktionstyp zugeordnet ist. Für unterschiedliche Transaktionen (Transaktionstypen) werden entsprechend unterschiedliche Transaktionseinheiten oder eine Transaktionseinheit mit entsprechend unterschiedlichen Transaktionsapplikationen eingesetzt.

Die Transaktionseinheit kann eine von der Servereinrichtung (unabhängige,) entfernt angeordnete Transaktionseinheit, eine interne Transaktionseinheit der Servereinrichtung oder eine der Servereinrichtung zugeordnete separate Transaktionseinheit sein. Vorzugsweise wird als separate Transaktionseinheit der Servereinrichtung ein reversibel eingesetztes oder fest eingebautes Hardware-Sicherheitsmodul eingesetzt. Vorzugsweise wird als entfernt angeordnete Transaktionseinheit verwendet: ein Hardware-Sicherheitsmodul als separate Einheit (Chipkarte, USB-Token, Sichere Massenspeicherkarte ...), ein in ein Endgerät reversibel eingesetztes Hardware-Sicherheitsmodul (Chipkarte insbesondere SIM-Karte, USB-Token, Sichere Massenspeicherkarte), ein in ein Endgerät fest eingebautes Hardware-Sicherheitsmodul, ein virtuelles Sicherheitsmodul in einem Endgerät oder eine sichere Ausführungsumgebung eines Endgerätes.

Die Servereinrichtung ist, wie erwähnt, eingerichtet, dem Weiterleitungsendgerät transaktionsabhängige Transaktionsinitialisierungsdaten bereitzustellen. Die transaktionsabhängigen Transaktionsinitialisierungsdaten können einerseits Informationen darüber enthalten, welche Transaktionen von dem Weiterleitungsendgerät - über die Unterstützung der Servereinrichtung, welche für eine Terminaleinrichtung transparent bleibt - unterstützt werden.

Auf der anderen Seite können die transaktionsabhängigen Transaktionsinitialisierungsdaten auch dazu dienen, das Weiterleitungsendgerät in die Lage zu versetzen, zumindest Anteile der Transaktion auf dem Weiterleitungsgerät selbst durchzuführen, ohne dass dafür eine Weiterleitung von Transaktionsdaten an die Servereinrichtung notwendig wäre. Auf diese Weise können Kommunikationszeiten verkürzt und das Auftreten von "timeout"-Fehlern zwischen der Terminaleinrichtung und dem Weiterleitungsendgerät in Folge verspäteter Antwort seitens des Weiterleitungsendgeräts auf Kommandos der Terminaleinrichtung vermieden werden. Für den Nutzer des Weiterleitungsendgeräts entsteht dadurch kein zusätzlicher Aufwand. Die Transaktionsinitialisierungsdaten werden durch die Servereinrichtung vorzugsweise automatisch auf dem Weiterleitungsendgerät bereitgestellt, ohne dass dies eine Interaktion mit dem Nutzer erfordert.

Das Weiterleitungsendgerät kann eingerichtet sein, transaktionsabhängige Transaktionsinitialisierungsdaten bei der Servereinrichtung anzufordern. Dies ist z.B. dann notwendig, wenn eine Terminaleinrichtung im Rahmen einer aufgebauten Datenkommunikation eine entsprechende Transaktionsapplikation auswählt, das Weiterleitungsendgerät darauf aber bisher nicht vorbereitet worden ist, d.h. die angeforderte Applikation "noch nicht kennt". Auf Anforderung des Weiterleitungsendgeräts stellt die Servereinrichtung dann die entsprechenden transaktionsabhängigen Transaktionsinitialisierungsdaten bereit. Dazu muss die begonnene Datenkommunikation zwischen der Terminaleinrichtung und dem Weiterleitungsendgerät in der Regel nicht unterbrochen werden.

Es ist aber auch möglich, dass die Servereinrichtung dem Weiterleitungsendgerät vorab, beispielsweise im Rahmen einer vorstehend beschriebenen Registrierung, transaktionsabhängige Transaktionsdaten zu voraussichtlich nachfolgend auszuführenden Transaktionen bereitstellt. Dies hat den Vorteil, dass die Transaktion mit der Terminaleinrichtung dann schneller und mit weniger Rückgriff auf die Servereinrichtung durchgeführt werden kann.

Die Servereinrichtung ist ebenfalls eingerichtet, dem Weiterleitungsendgerät transaktionsunabhängige Transaktionsinitialisierungsdaten bereitzustellen. Diese dienen zum effizienten Aufbauen einer Datenkommunikationsverbindung mit der Terminaleinrichtung in einer initialen Phase, welche einer Transaktionsphase vorangeht. Auch diese transaktionsunabhängigen Transaktionsinitialisierungsdaten werden dem Weiterleitungsendgerät vorzugsweise vorab, z.B. während der Registrierung, durch die Servereinrichtung bereitgestellt.

Im Folgenden wird die Erfindung mit Bezug auf die beiliegenden Zeichnungen beispielhaft beschrieben. Darin zeigen:
- Figur 1: eine Ausführungsform eines Transaktionssystems;
- Figur 2: schematisch verschiedene Sicherheitselemente eines Weiterleitungsendgeräts;
- Figur 3: einen Ausschnitt der internen Struktur des Weiterleitungsendgeräts aus Fig. 2;
- Figur 4: einen Ausschnitt der internen Struktur eines Transaktionsendgeräts in Verbindung mit einem portablen Datenträger;
- Figur 5: einen Überblick über wesentliche Schritte eines Transaktionsverfahrens (Registrierung, Anmeldung, Transaktion);
- Figuren 6 und 7: einzelne Schritte im Rahmen der Transaktion aus Fig. 5 zwischen einer Terminaleinrichtung und weiteren an der Transaktion beteiligten Geräten.

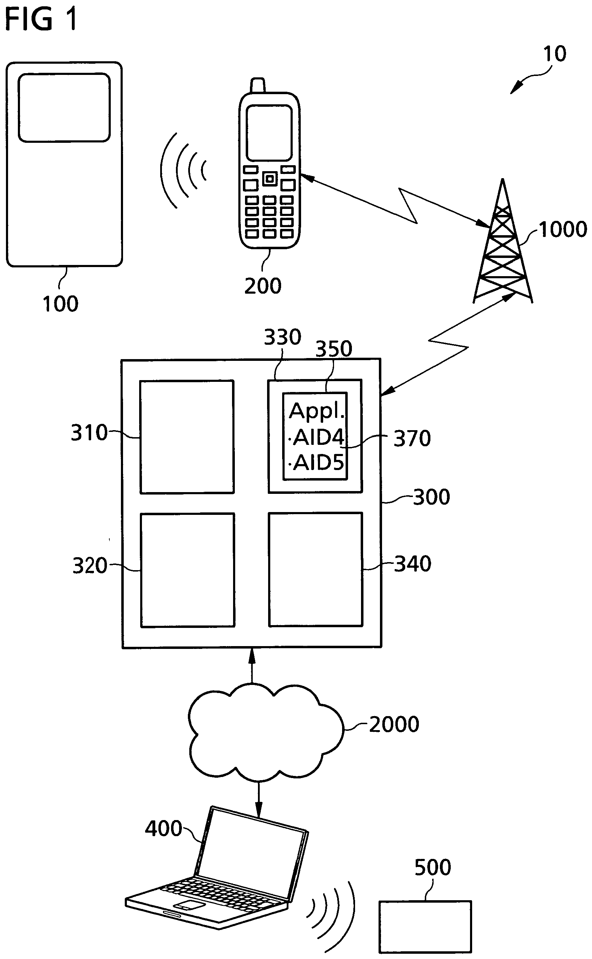

Mit Bezug auf Fig.1 umfasst das gezeigte Transaktionssystem 10 eine Terminaleinrichtung 100, ein Weiterleitungsendgerät 200, eine Servereinrichtung 300, ein Transaktionsgerät 400 sowie einen portablen Datenträger 500.

In nachstehend beschriebenen Ausführungsformen des Transaktionssystems 10 können einzelne der Komponenten, beispielsweise der Datenträger 500 oder dieser und das Transaktionsendgerät 400 wegfallen.

Der Übersichtlichkeit halber ist in Fig.1 jede der Komponenten nur einmal dargestellt worden. In der Regel umfasst das Transaktionssystem 10 aber eine oder wenige, miteinander verbundene Servereinrichtungen 300, eine Mehrzahl von Terminaleinrichtungen 100, eine Mehrzahl von Weiterleitungsendgeräten 200 und gegebenenfalls eine Mehrzahl von Transaktionsendgeräten 400, wobei jedes dieser Transaktionsendgeräte 400 optional mit einer Mehrzahl von portablen Datenträgern 500 verbunden werden kann.

Eine Terminaleinrichtung 100 ist eingerichtet, über eine kontaktlose Datenkommunikation eine Transaktion mit einem dafür eingerichteten Gerät durchzuführen. Dabei muss dieses Gerät in der Lage sein, eine Datenkommunikation mit der Terminaleinrichtung 100 aufzubauen und eine Transaktionsapplikation bereitzustellen, welche einer von der Terminaleinrichtung 100 vorgegebenen Transaktion zugeordnet ist. Die Terminaleinrichtung 100 kann beispielsweise als Zugangskontrollsystem, als Fahrkartenterminal im ÖPNV, als Bezahlterminal oder dergleichen eingerichtet sein. Die entsprechende Transaktion entspricht dann einer Authentisierungsapplikation, eventuell verbunden mit dem Nachweis eines geleisteten Eintrittspreises, oder die Bezahlapplikation einer vorgegebenen Dienstleistung, beispielsweise der Nutzung öffentlicher Verkehrsmittel oder dergleichen. Im Rahmen einer Bezahlapplikation wird dann beispielsweise eine elektronische Börse, welche auf der Transaktionseinheit gespeichert ist, belastet.

Es ist bekannt, als Geräte zum Durchführen solcher Transaktionen kontaktlos kommunizierende portable Datenträger 500, beispielsweise Chipkarten, zu verwenden. Die entsprechende Transaktionsapplikation ist dabei jeweils auf einem solchen Datenträger 500 gespeichert. In der Regel wird für jede der zahlreichen, verschiedenen Transaktionen, welche gegenüber einer Terminaleinrichtung 100 der beschriebenen Art durchgeführt werden kann, ein eigener, der entsprechenden Terminaleinrichtung 100 zugeordneter Datenträger 500 bereitgestellt. Dies hat zur Folge, dass ein Nutzer, möchte er verschiedene Transaktionen bei verschiedenen Terminals durchführen, jeweils die dazugehörigen portablen Datenträger bei sich tragen muss. Zusätzlich ist darauf zu achten, dass entsprechende Börsen, welche bei Bezahltransaktionen belastet werden, stets eine ausreichende Deckung aufweisen.

Alternativ können einzelne der Transaktionsapplikationen ausführbar auf einem Transaktionsendgerät 400, beispielsweise einen Mobilfunkendgerät, installiert werden. Dieses kann dann, eine geeignete Datenkommunikationsschnittstelle vorausgesetzt, gegenüber der Terminaleinrichtung 100 wie ein Datenträger 500 auftreten und eine gewünschte Transaktion durchführen. Für den Nutzer ist hier nachteilig, dass eine gewünschte Transaktionsapplikation zumeist im Vorfeld installiert und gegebenenfalls eine dazugehörige Börse aufgeladen werden muss. Eine spontane Nutzung, insbesondere eine erstmalige oder nur einmalige Nutzung einer bisher unbekannten Transaktionsapplikation, beispielsweise die Nutzung eines öffentlichen Verkehrsmittels in einer fremden, erstmals besuchten Stadt, ist dann nicht möglich, da die entsprechende Transaktionsapplikation auf dem mitgeführten Transaktionsendgerät 400 nicht installiert ist.

Das in Fig. 1 dargestellte Transaktionssystem 10 kann vorteilhafte, nachstehend beschriebene Transaktionsverfahren unterstützen, mittels welcher die beschriebenen Nachteile bekannter Transaktionssysteme vermieden werden können.

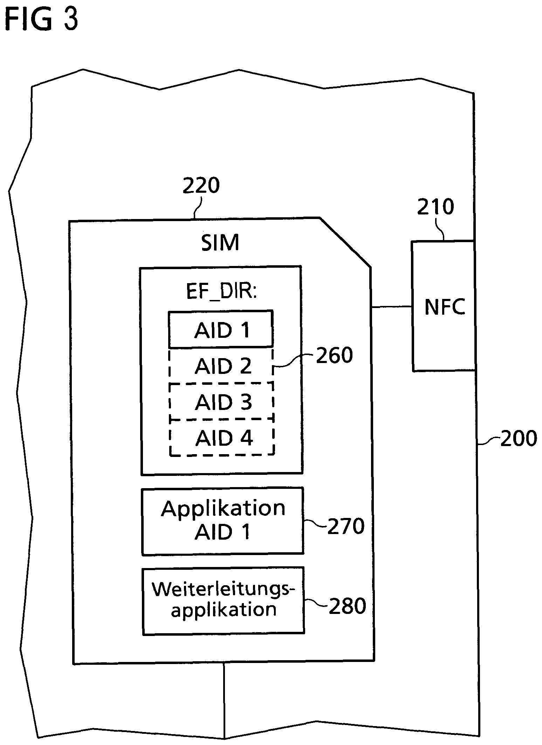

Ein Weiterleitungsendgerät 200 ist im Nahbereich der Terminaleinrichtung 100 angeordnet und eingerichtet, eine Datenkommunikationsverbindung mit der Terminaleinrichtung 100 aufzubauen. Eine Transaktion betreffende Transaktionsdaten werden von dem Weiterleitungsendgerät 200 nicht verarbeitet, sondern an eine entfernt angeordnete Transaktionseinheit weiter geleitet. Entsprechend ist das Weiterleitungsendgerät 200 eingerichtet, von der Transaktionseinheit empfangene Daten an die Terminaleinrichtung 100 weiterzuleiten. Das Weiterleitungsendgerät 200 umfasst zu diesem Zweck eine Weiterleitungsapplikation 280, welche mit Bezug auf Fig. 3 genauer beschrieben wird. Abhängig von der Ausgestaltung können sowohl die Servereinrichtung 300, das Transaktionsendgerät 400 als auch der portable Datenträger 500 können die Transaktionseinheit sein. Die konkrete Darstellung in Figur 1 ist ausgerichtet an dem Beispiel des Weiterleitens der Transaktionsdaten von dem Weiterleitungsendgerät 200 über die Servereinrichtung 300 und das Transaktionsendgerät 400 zu dem portablen Datenträger 500 als Transaktionseinheit.

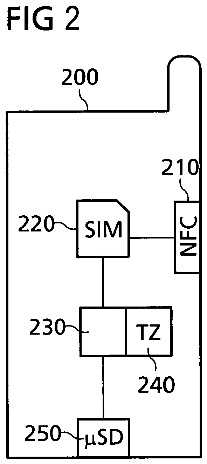

Die Datenkommunikation zwischen der Terminaleinrichtung 100 und dem Weiterleitungsendgerät 200 wird gemäß einem bekannten kontaktlosen (Nahbereichs-)Kommunikationsprotokoll durchgeführt, beispielsweise gemäß ISO/IEC 14443, wie es im Zusammenhang mit kontaktlos kommunizierenden Chipkarten bekannt ist, oder gemäß einem der NFC-Protokolle ("Near Field Communication"; ISO/IEC 18092 (NFCIP-1); ISO/IEC 21481 (NFCIP-2)). Das Weiterleitungsendgerät 200 umfasst dazu eine geeignete Datenkommunikationsschnittstelle 210, welche nachstehend mit Bezug auf Fig. 2 beschrieben wird.

Gegenüber der Terminaleinrichtung 100 gibt sich das Weiterleitungsendgerät 200 in gewisser Weise als portabler Datenträger aus, operiert also in einem Modus "being card". Dieser Modus wird von der Datenkommunikationsschnittstelle 210 genauso unterstützt wie ein Modus "being reader", in welchem sich das Gerät gegenüber einem portablen Datenträger 500 als Terminaleinrichtung ausgeben kann.

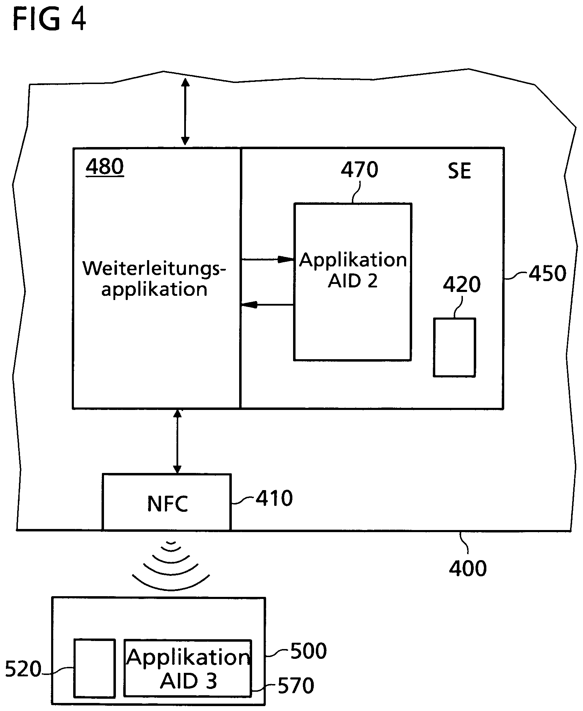

In analoger Weise wird die Datenkommunikation zwischen dem Transaktionsendgerät 400 und dem portablen Datenträger 500 hergestellt. Das Transaktionsendgerät 400 besitzt dazu eine der Datenkommunikationsschnittstelle 210 entsprechende Datenkommunikationsschnittstelle 410 (vgl. Fig. 4). Allerdings operiert hier das Transaktionsendgerät 400 gegenüber dem portablen Datenträger 500 als Terminal. Die bekannten technischen Details finden sich beispielsweise im "RFID-Handbuch", 5.Auflage, Hanser Verlag, München 2008, Kap. 11.6). Gemäß einer alternativen Ausführungsform kann der Datenträger 500 auch als kontaktbehaftet kommunizierender Datenträger ausgebildet sein, welcher mit dem Transaktionsendgerät 400 in bekannter Weise über ein geeignetes Lesegerät verbunden werden kann.

Die Datenkommunikation zwischen dem Weiterleitungsendgerät 200 und der Servereinrichtung 300 sowie, falls erforderlich, zwischen der Servereinrichtung 300 und dem Transaktionsendgerät 400, wird über ein geeignetes, bekanntes Kommunikationsnetzwerk hergestellt. Exemplarisch sind in Fig. 1 ein Mobilfunknetzwerk 1000 oder das Internet 2000 dargestellt.

Die Servereinrichtung 300 umfasst verschiedene Komponenten. Eine Registrierungsservereinrichtung 310 dient dazu, verschiedene Weiterleitungsendgeräte 200 und/ oder Transaktionsendgeräte 400 im Transaktionssystem 10 zu registrieren.

Ein Weiterleitungsendgerät 200 oder ein Transaktionsendgerät 400, welches Teil des Transaktionssystems 10 werden möchte, kann sich in einem Registrierungsschritt bei der Servereinrichtung 300 registrieren. Das Weiterleitungsendgerät 200 bzw. das Transaktionsendgerät 400 kann dazu mit einer Registrierungsapplikation ausgestattet sein, welche eine Verbindung zu der Servereinrichtung 300 aufbaut. Eine solche Anwendung kann auf einem Sicherheitselement des entsprechenden Geräts 200, 400 installiert sein (vgl. Fig. 2). Dabei können für jedes der Geräte 200, 400 Registrierungsdaten gespeichert werden, beispielsweise eine eindeutige Kennung des Geräts 200, 400, eine Mobilfunknummer, eine IP-Adresse oder dergleichen. Anhand dieser Daten kann die Servereinrichtung 300 das Gerät 200, 400 nachfolgend authentifizieren und gegebenenfalls adressieren.

Prinzipiell kann ein geeignet ausgestattetes Endgerät 200,400, beispielsweise ein Mobilfunkendgerät, in dem Transaktionssystem 10 sowohl die Rolle eines Weiterleitungsendgeräts 200 als auch die Rolle eines Transaktionsendgeräts 400 spielen. Im Rahmen der Registrierung kann eine entsprechende Rollenauswahl getroffen werden, wobei ein Endgerät auch beide Rollen, wenn auch nicht im Rahmen derselben Transaktion, einnehmen kann. Weiter kann festgelegt werden, welches Weiterleitungsendgerät 200 mit welchem Transaktionsendgerät 400 zum Durchführen einer Transaktion prinzipiell vermittelt werden darf. Dabei kann ein Transaktionsendgerät 400 beispielsweise im Rahmen der Registrierung festlegen, dass lediglich eine fest vorgegebene Auswahl von eindeutig identifizierten Weiterleitungsendgeräten 200 in nachstehend beschriebener Weise auf eine Transaktionsapplikation des Transaktionsendgeräts 400 oder eines damit verbundenen Datenträgers 500 zugreifen darf. Auf der anderen Seite kann ein Weiterleitungsendgerät 200 beispielsweise festlegen, dass die von ihm weitergeleiteten Transaktionsdaten von der Servereinrichtung 300 stets, falls verfügbar, an ein voreingestelltes Transaktionsendgerät 400 weitergeleitet werden sollen. Die beschriebenen Registrierungsdaten werden von der Registrierungsservereinrichtung 310 gespeichert und verwaltet.

In einem weiteren, nachfolgend beschriebenen Schritt, wenn sich ein Weiterleitungsendgerät 200 bei der Servereinrichtung 300 anmeldet, um in Vorbereitung einer Transaktion mit einer Terminaleinrichtung 100 erforderliche Transaktionsinitialisierungsdaten anzufordern, stellt die Servereinrichtung 300 dem Weiterleitungsendgerät 200 diese Transaktionsinitialisierungsdaten bereit. Dies kann auch bereits im Rahmen der Registrierung erfolgen. Inhalt und Bedeutung der Transaktionsinitialisierungsdaten werden nachfolgend genauer beschrieben.

Eine Update-Servereinrichtung 320 dient dazu, auf dem Weiterleitungsendgerät 200 oder dem Transaktionsendgerät 400 zum Durchführen einer Transaktion im Rahmen des beschriebenen Transaktionssystems 10 gespeicherte Daten gegebenenfalls zu aktualisieren. Dies kann beispielsweise die Weiterleitungsapplikation 280, 480 betreffen oder einzelne Transaktionsinitialisierungsdaten. Eine solche Aktualisierung erfolgt in der Regel über die Luftschnittestelle ("over the air", OTA) und wird von einem Nutzer des entsprechenden Endgeräts 200, 400 nicht bemerkt.

Eine Applikationsservereinrichtung 330 stellt eine Reihe verschiedener Transaktionsapplikationen 370 bereit. Mittels dieser Applikationsservereinrichtung 330 stellt die Servereinrichtung 300 die Funktionalität einer Transaktionseinheit bereit. Die Applikationsservereinrichtung 330 umfasst eine Vielzahl portabler Datenträger 350, die jeweils zumindest einen Transaktionstyp unterstützen, also eine Transaktionsapplikationen 370 für diesen Transaktionstyp aufweisen. Für unterschiedliche Transaktionstypen stellt die Servereinrichtung entsprechend unterschiedliche portable Datenträger 350 bereit. Somit kann die Applikationsservereinrichtung 330 durch eine Vielzahl herkömmlicher portabler Datenträger 350 in die Lage versetzt werden unterschiedlichste Transaktionstypen durchzuführen.

Die Servereinrichtung 300 verwaltet Daten zu den Transaktionseinheiten, die weitergeleitete Transaktionsdaten verarbeiten können. Sie speichert die Daten beispielsweise in der Form einer Liste der Transaktionseinheiten. Zugeordnet zu der Transaktionseinheit wird eine (Weiterleitungs-)Adresse gespeichert. Die Weiterleitungsadresse ist geeignet, um (durch das Weiterleitungsendgerät 200 oder die Servereinrichtung 300) eine Datenkommunikation (über ein Netzwerk 1000,2000) mit der Transaktionseinheit aufzubauen. Insbesondere wird für die Transaktionseinheiten angegeben, welchen Transaktionstyp oder welche Transaktionstypen sie unterstützen. Ferner wird ein für die Transaktionseinheit, zumindest für den Transaktionstyp, eindeutiger Identifikator gespeichert. Schließlich können weiterhin eine Benutzerzuordnung zu den Transaktionseinheiten und ggf. benutzerspezifische Vorgaben für die Transaktionseinheiten gespeichert sein. Diese verwalteten Daten werden vorzugsweise von der Registrierungsservereinrichtung 310 erfasst.

Die Servereinrichtung 300 ist durch die Vermittlungsservereinrichtung 340 eingerichtet, um eine Transaktionseinheit aus den gespeicherten Transaktionseinheiten auszuwählen. Die Auswahl erfolgt abhängig von einem oder einer Kombination der folgenden Auswahlparameter: dem Weiterleitungsendgerät 200 (bzw. dessen Benutzer und/ oder Standort), dem Transaktionstyp oder Vorgaben des Besitzer der Transaktionseinheit. Das Auswählen erfolgt vorzugsweise auf Anfrage durch ein Weiterleitungsendgerät 200. Es ist aber auch möglich vorab eine Transaktionseinheit, beispielsweise für einen bestimmten Transaktionstyp auf einem Weiterleitungsendgerät an einem bekannten Standort, auszuwählen.

Die Vermittlungsservereinrichtung 340 kann dem Weiterleitungsendgerät die Weiterleitungsadresse der ausgewählten Transaktionseinheit mitteilen. Das Weiterleitungsendgerät 200 wird mit Hilfe der Weiterleitungsadresse eine Datenkommunikation mit der ausgewählten Transaktionseinheit aufbauen. In der Figur 1 wurde jedoch darauf verzichtet darzustellen, dass das Weiterleitungsendgerät 200 somit über das Mobilfunknetz 1000 und/oder das Internet 2000 eine von dem Server 300 unabhängige Verbindung zu dem Transaktionsendgerät 400 bzw. dem portablen Datenträger 500 aufbauen kann. In einem eher extremen Sonderfall könnte die Servereinrichtung 300 dem Weiterleitungsendgerät 200 sogar mitteilen, dass - trotz vorhandener Weiterleitungsoption - eine lokal auf dem Weiterleitungsendgerät 200 gespeicherte Applikation, z.b. die Applikation AID1 des Sicherheitselements 220, die Transaktion durchführen soll.

Die Vermittlungsservereinrichtung 340 ist ferner eingerichtet, für eine Transaktion über das Weiterleitungsendgerät 200 von der Terminaleinrichtung 100 weitergeleitete Transaktionsdaten an eine ausgewählte oder auszuwählende Transaktionseinheit 450,500 weiterzuleiten. Die Vermittlungsservereinrichtung 340 stellt somit zum Durchführen einer Transaktion im Rahmen des Transaktionssystems 10 eine indirekte Datenkommunikationsverbindung zwischen einem Weiterleitungsendgerät 200 und dem Transaktionsendgerät 400 her. Entsprechend muss die Weiterleitungsadresse in dieser Ausgestaltung dem Weiterleitungsendgerät 200 nicht mitgeteilt werden.

In Fig. 2 ist eine mögliche Sicherheitsstruktur eines Endgeräts 200,400 am Beispiel des Weiterleitungsendgeräts 200 gezeigt. Das Transaktionsendgerät 400 kann gleich oder ähnlich ausgestattet sein.

Zahlreiche Transaktionen zwischen der Terminaleinrichtung 100 und der Servereinrichtung 300, dem Transaktionseinheit 450 oder dem Datenträger 500 verwenden und verarbeiten sicherheitsrelevante oder vertrauliche Daten eines Nutzers, beispielsweise Authentisierungsdaten, Geldbeträge oder dergleichen. Deshalb ist es wesentlich, dass die Transaktion betreffende Transaktionsdaten in den jeweiligen Geräten 200, 400, welche die Transaktionsdaten weiterleiten oder verarbeiten, sicher gespeichert und verwaltet werden. Dazu umfassen die entsprechenden Endgeräte 200, 400 verschiedene Sicherheitselemente(-module).

Die Datenkommunikationsschnittstelle 210, welche als NFC-Interface ausgebildet ist, kann selbst bereits ein Sicherheitselement umfassen, beispielsweise in Form einer sicheren Speicherkarte (nicht gezeigt).

Als weiteres Sicherheitselement umfasst ein als Mobilfunkendgerät ausgebildetes Endgerät 200 eine (U)SIM-Mobilfunkkarte 220. Diese kann selbst über eine eigene Antenne (nicht gezeigt) verfügen oder mit der Datenkommunikationsschnittstelle 210 verbunden sein und dieser gegebenenfalls als Sicherheitselement dienen.

Ein Controller 230 des Endgeräts 200 kann einen hardwareunterstützten, softwarebasiert gesicherten Bereich umfassen (beispielsweise gemäß der ARM-TrustZone-Technologie), welcher ein weiteres Sicherheitselement bereitstellt. Sicherheitsrelevante Daten können in diesem gesicherten Bereich unter einem im Wesentlichen eigenen Sicherheitsbetriebssystem gesichert verarbeitet werden.

Schließlich kann das Endgerät 200 weitere bekannte Sicherheitselemente umfassen, beispielsweise eine sichere Speicherkarte 250 oder dergleichen.

Schematisch sind in Fig. 3 Anteile der internen Struktur des Weiterleitungsendgeräts 200 und in Fig. 4 des Transaktionsendgeräts 400 gezeigt.

Die dem Weiterleitungsendgerät 200 von Fig. 3 als Sicherheitselement dienende SIM-Karte 220 umfasst eine aus dem Bereich der Chipkarten bekannte Datei EF_DIR. Darin enthaltene Daten, so genannte Applikations-Identifizierer (AIDs), zeigen an, welche Applikationen von dem Gerät 200 bzw. dessen SIM-Karte 220 unterstützt werden. Wenn also beispielsweise die Terminaleinrichtung 100 eine Datenkommunikationsverbindung mit dem Weiterleitungsendgerät 200 aufbaut und die Datei EF_DIR ausliest, geht die Terminaleinrichtung 100 davon aus, dass das Weiterleitungsendgerät 200 diejenigen Applikationen bereitstellt, die durch die Identifizierer AID1, AID2, AID3 und AID4 bezeichnet sind.

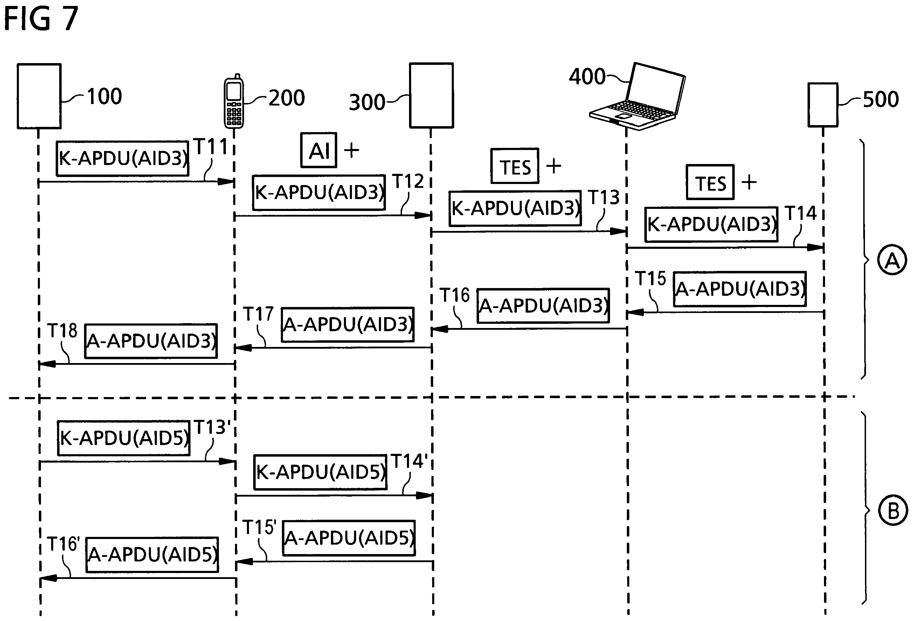

Tatsächlich unterstützt das Weiterleitungsendgerät 200, wie in Fig. 3 angedeutet, selbst lediglich eine Transaktionsapplikation 270, welche mit AID1 identifiziert wird. Die Einträge AID2, AID3 und AID4 sind dem Weiterleitungsendgerät 200 in einem nachfolgend näher beschriebenen Anmeldungsschritt von der Servereinrichtung 300 als Transaktionsinstialisierungsdaten 260 bereitgestellt worden. Eine Terminaleinrichtung 100, welche zum Durchführen einer Transaktion auf dem Weiterleitungsendgerät 200 beispielsweise eine mit AID3 bezeichnete Transaktionsapplikation erwartet, geht vorliegend davon aus, dass das Weiterleitungsendgerät 200 diese Transaktionsapplikation unterstützt und sendet entsprechende Transaktionsdaten, beispielsweise in Form von bekannten Kommando-APDUs. Da das Weiterleitungsendgerät 200 die Funktionalität bezüglich der mit AID3 bezeichneten Transaktionsapplikation mittels des Eintrags in der Datei EF_DIR nur "vortäuscht", leitet das Weiterleitungsendgerät 200 die empfangenen Kommandos mittels der Weiterleitungsapplikation 280 an die Servereinrichtung 300 oder eine Transaktionseinheit 400, 500 weiter (vgl. auch Fig. 7).

Wie auch anhand der weiteren Ausführungen deutlich wird, leitet das Weiterleitungsendgerät Transaktionsdaten abhängig vom Transaktionstyp an unterschiedliche Transaktionseinheiten weiter. Die entsprechenden Transaktionsapplikationen sind enthalten in der Servereinrichtung 300 für die AID4 und AID5, in dem Transaktionsendgerät 400 für AID2 und in dem portablen Datenträger 500 für AID3.

In Figur 3 ist die Liste der von dem Weiterleitungsendgerät unterstützten Transaktionstypen, in Form der Datei EF_DIR 260, im Sicherheitselement 220 des Weiterleitungsendgerätes 200 gespeichert. Die Liste kann aber ebenso wie die Weiterleitungsapplikation in anderen Einheiten des Weiterleitungsendgerätes 200 vorgesehen sein. Die Liste enthält echte Einträge, der tatsächlich lokal vorhandenen Transaktionsapplikationen, sowie virtuelle Einträge, der (nicht lokal vorhandenen bzw. nur) mittels Weiterleitung verfügbaren Transaktionsapplikationen.

Das Weiterleitungsendgerät leitet die Transaktionsdaten transparent, d.h. unverändert weiter. Daher kann auf das Sicherheitselement 220 für die Weiterleitung verzichtet werden. In der Regel wird im Rahmen der Transaktion zwischen der Teminaleinrichtung 100 und der Transaktionseinheit 300,400, 500 ein sicherer Kanal aufgebaut, d.h. es findet eine Ende-zu-Ende Verschlüsselung statt. Das Sicherheitselement 220 ist jedoch ein geeigneter Speicher beispielsweise für die Anmeldungsdaten (Accountdaten) zur Anmeldung des Weiterleitungsendgerätes 200 gegenüber dem Server 300.

Wie bereits erwähnt könnten zumindest die virtuellen Einträge der Liste 260 - vorzugsweise vorab - von der Servereinrichtung 300 zur Verfügung gestellt werden. Die Liste 260 kann dabei von der Servereinrichtung 300 dynamisch an einen Aufenthaltsort des Weiterleitungsendgeräts 200 angepasst werden und ggf. in Antwort auf einen Ortswechsel aktualisiert werden. Die Servereinrichtung 300 kann das Weiterleitungsendgerät nur die virtuellen Einträge oder die vollständige Liste mit virtuellen und echten Einträgen verwalten. Speichern wird die Servereinrichtung 300 für jedes Weiterleitungsendgerät 200 nur die echten Einträge und ggf. einen Verweis auf den aktuell gespeicherten Satz virtueller Einträge. Die Liste 260 bzw. zumindest deren virtuelle Einträge können auch nur bei Bedarf durch das Weiterleitungsendgerät 200 vom Server 300 abgefragt, also nicht vorab bereitgestellt, werden.

Wie nachfolgend beschrieben, kann eine Transaktionsapplikation auf der Servereinrichtung 300, mittels der Applikationsservereinrichtung 330, falls diese den fraglichen Transaktionstyp (beispielsweise durch die Applikation 370, bezeichnet mit AID4, vgl. Fig. 1) unterstützt, durchgeführt werden.

Falls nicht, ist die Vermittlungsserverapplikation 340 eingerichtet, die Transaktionsdaten an ein geeignetes, in nachstehend beschriebener Weise vermitteltes Transaktionsendgerät 400 weiterzuleiten. Falls das Transaktionsendgerät 400 bzw. dessen Sicherheitselement 450 die entsprechende Transaktionsapplikation 470, bezeichnet mit AID2, wie in Fig. 4 angedeutet, unterstützt, wird die Transaktionsapplikation 470 dort ausgeführt und ein entsprechendes Antwortkommando wird über die Vermittlungsservereinrichtung 340 der Servereinrichtung 300 und mittels der Weiterleitungsapplikation 280 des Weiterleitungsendgeräts 200 an die Terminaleinrichtung 100 übertragen.

Falls auch das Transaktionsendgerät 400 die angeforderte Transaktion nicht selbst unterstützt, jedoch der Datenträger 500, wie für den Fall der Anforderung der Transaktionsapplikation AID3 in Fig. 4 angedeutet, kann eine Weiterleitungsapplikation 480 des Transaktionsendgeräts 400, welche im Wesentlichen der Weiterleitungsapplikation 280 des Weiterleitungsendgeräts 200 entspricht, die Transaktionsdaten (in der Form einer Kommando-APDU) an den Datenträger 500 weiterleiten (vgl. auch Fig. 7). Dort wird dann schließlich die Transaktionsapplikation AID3 ausgeführt. Ein entsprechende Antwort (Antwort-APDU) findet seinen Weg an die Terminaleinrichtung über das Transaktionsendgerät 400, die Servereinrichtung 300 und das Weiterleitungsendgerät 200 unter Vermittlung der Weiterleitungsapplikation 480, der Vermittlungsservereinrichtung 340 und der Weiterleitungsapplikation 280.

Figur 4 zeigt Komponenten eines Transaktionsendgerätes 400 sowie den portablen Datenträger 500. In dem Transaktionsendgerät sind unter anderem ein Sicherheitselement 450, das ebenso wie zuvor beschrieben ausgestaltet sein kann, und eine Schnittstelle zur kontaktlosen Nahbereichskommunikation 410 auf. Über die Schnittstelle 410 kann das Transaktionsendgerät beispielsweise mit dem Datenträger 500 kontaktlos kommunizieren. Das Transaktionsendgerät 400 kann, ähnlich wie das Weiterleitungsendgerät ein mobiles Endgerät, wie ein Mobilfunkgerät, ein PDA oder Notebook sein. Als Transaktionsendgerät kann aber auch ein stationäres Gerät, wie ein PC, Netzwerkrechner oder ein Kartenlesegerät, dienen.

In dem Sicherheitselement 450 des Transaktionsendgerätes 400 ist eine Transaktionsapplikation 470 mit der AID2 angeordnet. Im Sicherheitselement 450 sind in der dargestellten Ausgestaltung weiterhin eine Weiterleitungsapplikation 480 und eine Weiterleitungserkennung 420 angeordnet. Insbesondere die Weiterleitungsapplikation 480 wird in der Regel jedoch nicht im Sicherheitselement, sondern in dem Transaktionsendgerät 400 angeordnet sein.

Die Weiterleitungsapplikation 480 leitet die von dem Weiterleitungsendgerät 200 empfangenen Transaktionsdaten (Kommando-APDUs) an die Applikation 470 mit der AID2 im Sicherheitselement oder an die Applikation mit der AID3 im portablen Datenträger 500 weiter. Die Antwort (Antwort-APDUs) der Applikation sendet sie zurück an das Weiterleitungsendgerät 200. Der Übertragungsweg kann dabei mit oder ohne Einbindung der Servereinrichtung 300 ausgestaltet sein.

Die Transaktionsapplikation 470 des Sicherheitselements 450 ist eingerichtet über die Schnittstelle 410 kontaktlose Transaktionen mit nicht dargestellten Terminaleinrichtungen durchzuführen. Wie die Terminaleinrichtung 100 geht also die Transaktionsapplikation 470 davon aus, dass sie an einer lokalen Transaktion im Nahbereich beteiligt ist. Diese Annahme gilt ebenso für den tragbaren Datenträger 500, der als lokaler Transaktionspartner im Nahbereich beispielsweise mit dem Transaktionsendgerät 400 (im Modus "Being Reader") agieren kann. Der an der Transaktion beteiligten Transaktionseinheit 450, 500 wird daher vorliegend ein Transaktionsendpunktsignal übertragen. Das Transaktionsendpunktsignal ist vorgesehen, um der Transaktionseinheit 450, 500 zu signalisieren dass sie die Transaktion als entfernt angeordneter Endpunkt einer weitergeleiten Transaktion durchführt. In diesem Kontext werden nähere Details zur Weiterleitungserkennung 420 später mit Bezug auf Fig. 7 beschrieben.

Im Folgenden werden verschiedene Ausführungsformen eines Transaktionsverfahrens auf der Basis des mit Bezug auf die Figuren 1 bis 4 beschriebenen Transaktionssystems 10 beschrieben. Aufgrund der bereits geschilderten Vielzahl von Varianten, wird die jeweilige Ausgestaltung nur beispielhaft beispielsweise ausgehend von einer der Varianten beschrieben.

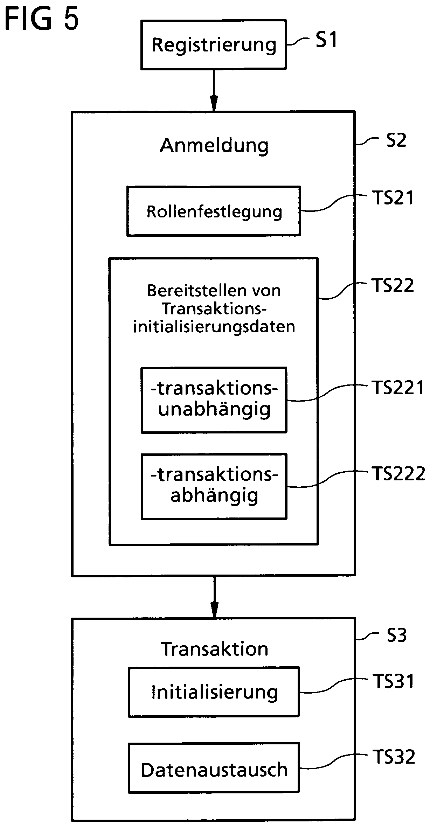

In Fig. 5 sind wesentliche Schritte bzw. Phasen eines Transaktionsverfahrens im Überblick dargestellt. Insbesondere die Phasen der Registrierung S1, Anmeldung S2 und Transaktion S3 können zeitlich unabhängig voneinander ablaufen. Beispielsweise erfolgt nach einmaliger Registrierung S1 täglich die Anmeldung S2 und danach beliebig oft Transaktionen S3.

In einem ersten Schritt S1, einem Registrierungsschritt, ist es erforderlich, dass sich das Weiterleitungsendgerät 200 und die Transaktionseinheiten 400, 500 bei der Servereinrichtung 300 registrieren. Dieser Schritt ist bereits vorstehend mit Bezug auf die Registrierungsservereinrichtung 310 ausführlich beschrieben worden.

In Schritt S2 meldet sich ein Endgerät 200,400, insbesondere ein Weiterleitungsendgerät 200, bei der Servereinrichtung 300 für eine nachfolgende Transaktion (vgl. Schritt S3) an. Dabei wird in Teilschritt TS21 die Rolle des Endgeräts für die Transaktion festgelegt, d.h. es wird bestimmt, ob ein Endgerät als Weiterleitungsendgerät 200 oder als Transaktionsendgerät 400 an der Transaktion beteiligt ist. Dieser Teilschritt kann gegebenenfalls auch bereits während der Registrierung durchgeführt werden, falls ein Gerät stets nur als Weiterleitungsendgerät 200 oder nur als Transaktionsendgerät operieren möchte.

In Teilschritt TS22 stellt die Servereinrichtung dem Weiterleitungsendgerät 200 Transaktionsinitialisierungsdaten bereit. Diese dienen dazu, ein Aufbauen einer Datenkommunikation zwischen einer Terminaleinrichtung 100 und dem Weiterleitungsendgerät 200 in Teilschritt TS31 während einer Initialisierungsphase zu ermöglichen bzw. zu erleichtern.

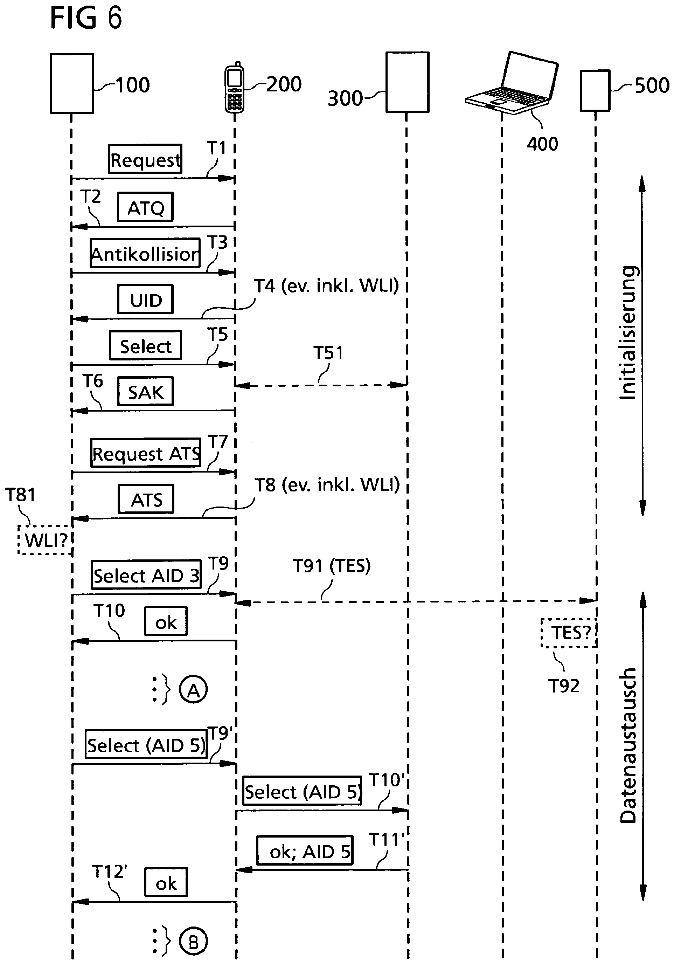

Um die Bedeutung der Transaktionsinitialisierungsdaten besser erläutern zu können, wird im Folgenden mit Bezug auf Fig. 6 kurz der Verlauf während einer solchen Initialisierungsphase zum Aufbau der entsprechenden Datenkommunikationsverbindung beschrieben, bevor, dann wieder mit Bezug auf Fig. 5, verschiedene Arten von Transaktionsinitialisierungsdaten beschrieben werden.

Eine Terminaleinrichtung 100 erwartet für gewöhnlich als Transaktionspartner einen kontaktlos kommunizierenden Datenträger 500. Demgemäß ist der Ablauf beim Aufbau der Datenkommunikationsverbindung, wie er in Fig. 6 in den Schritten T1 bis T8 dargestellt wird, für den Fall illustriert, dass sich das Weiterleitungsendgerät 200 quasi als kontaktlos kommunizierende Chipkarte vom Typ-A (gemäß ISO/IEC 14443) ausgibt. Ein Aufbau einer Datenkommunikation mit einem Typ-B-Datenträger verläuft abweichend, aber im Grunde ähnlich.

Im Schritt T1 empfängt das Weiterleitungsendgerät ein REQUEST-Kommando, welches es im Schritt T2 mit einem vorgegeben ATQ-Kommando ("ANSWER TO REQUEST") beantwortet. Die nachfolgenden Schritte T3 bis T6 dienen dem Auswählen des Weiterleitungsendgeräts 200 durch die Terminaleinrichtung 100. Dies ist notwendig, da sich gleichzeitig mehrere Kommunikationspartner in Reichweite der Terminaleinrichtung 100 befinden können. Dieses muss in der Lage sein, und dazu wird in Schritt T3 ein Antikollisionsverfahren gestartet, jeden einzelnen dieser möglichen Kommunikationspartner gezielt anhand eines eindeutigen Identifizierers, des in Schritt T4 von dem Weiterleitungsendgerät 200 zu diesem Zweck gesendeten UID, identifizieren und adressieren zu können. Nach Erhalt und Erkennen des Identifizierers UID wählt die Terminaleinrichtung 100 das Weiterleitungsendgerät 200 in Schritt T5 schließlich zur weiteren Datenkommunikation, d.h. zum Durchführen einer Transaktion, aus. Dies wird von der Terminaleinrichtung in Schritt T6 bestätigt. Die Schritte T1 bis T6 dienen lediglich der Auswahl des Weiterleitungsendgeräts und sind unabhängig von einer nachfolgend ausgeführten Transaktion.

Auch die Schritte T7 und T8 sind transaktionsunabhängig. Der von der Terminaleinrichtung 100 in Schritt T7 angeforderte und in Schritt T8 von dem Weiterleitungsendgerät 200 bereitgestellte Datensatz ATS ("answer to select") beschreibt im Wesentlichen Protokoll-Parameter eines Typ-A-Datenträgers, mit welchem die Terminaleinrichtung aufgrund des Verhaltens des Weiterleitungsendgeräts 200 glaubt, eine Datenkommunikation aufzubauen. Diesem Datenträger könnte beispielsweise der Datenträger 500 entsprechen, mit welchem die Terminaleinrichtung 100 anschließend (vgl. Fig. 7, Schritte T11 bis T18) tatsächlich eine Transaktion mit zugehöriger Transaktionsapplikation 570 mit der AID3 durchführt. Ein Parameter des ATS-Datensatzes, der "FWI" ("frame waiting integer"), definiert beispielsweise die maximale Wartezeit, welche die Terminaleinrichtung 100 (in der der initialen Phase nachfolgenden Transaktionsphase) nach Aussenden eines Kommandos auf die Antwort des Datenträgers zu warten hat. Nach Ablauf dieser Zeitspanne tritt ein so genannter "timeout"-Fehler auf. Des Weiteren umfasst der ATS-Datensatz herstellerspezifische Felder, so genannte "historical bytes", welche frei definierbare Information umfassen können.

Prinzipiell wäre es möglich, dass das Weiterleitungsendgerät 200 mittels der Weiterleitungsapplikation 280 sämtliche von der Terminaleinrichtung 100 in den Schritten T1, T3, T5 und T7 empfangenen Kommandos über die Vermittlungsservereinrichtung 340 der Servereinrichtung 300 und die Weiterleitungsapplikation 480 des Transaktionsendgeräts 400 an den Datenträger 500 weiterleitet (bzw. an die Applikationsservereinrichtung 340 oder das Transaktionsendgerät 400, falls diese die Transaktionsapplikation bereitstellen). Der Datenträger 500 hätte dann, genau, wie wenn er direkt - d.h. ohne die beschriebene Weiterleitung - eine Datenkommunikation mit der Terminaleinrichtung 100 aufgebaut hätte, entsprechende Antwort-Kommandos gesendet, welche auf dem umgekehrten Weg wieder an die Terminaleinrichtung 100 weitergeleitet worden wären.

Allerdings ist es gemäß dem beschriebenen Kommunikationsprotokoll erforderlich, dass einzelne der Antwortkommandos die Terminaleinrichtung 100 innerhalb genau vorgegebener, knapp bemessener Zeitintervalle erreichen, um als gültige Antwortkommandos zu gelten. Dies gilt insbesondere für ATQ (Schritt T2) und die Antworten auf die Antikollisionsanfragen (Schritt T4). Eine Weiterleitung der Anfrage- und Antwortkommandos zum und vom Datenträger 500 kann wegen der auftretenden Datenübertragungs- und Weiterleitungszeiten leicht zu einer Überschreitung der geforderten Zeitgrenzen und damit zum Scheitern des Aufbauens der Datenkommunikation zu der Terminaleinrichtung 100 führen.

Im Idealfall sind die Schritte T1 bis T8 nicht nur transaktionsunabhängig, also für unterschiedliche Transaktionstypen gleich, sondern sind vorgegebene Schritte zum Aufbauen der Kommunikationsverbindung gemäß einer Protokollschicht (also z. b. nach ISO 14443). Erst in den weiteren Schritten T9-T10 und Abschnitt A bzw. T9'-T12' und Abschnitt B werden Transaktionsdaten übertragen. Transaktionsdaten im vorliegenden Sinne sind Daten einer Applikationsschicht, die auch als Applikationsprotokolldaten bezeichnet werden können. Solche APDUs (Application Protocol Data Units) werden als Kommando-APDUs oder Antwort-APDUs versendet. Die in der Initialisierungsphase übertragenen Daten der Protokollschicht können entsprechend als Transportprotokolldaten bezeichnet werden.

Der vollständige ISO/IEC 14443-Protokollstack wird auch während der Zeitpunkte T9-T12 bzw. T9'-T12' im Weiterleitungsendgerät 200 abgearbeitet. Lediglich die im Transportprotokoll ISO/IEC 144443 eingebetteten (i. d. R. nach ISO/IEC 7816 codierten) Applikationsprotokolldaten werden also transparent an die Transaktionseinheit weiter geleitet werden. Die Applikationsprotokolldaten werden vom Weiterleitungsendgerät 200 über eine Netzwerkverbindung, an eine Transaktionseinheit 300, 400 oder 500, weitergeleitet.

Die Netzwerkverbindung wird durch das Weiterleitungsendgerät 200 aufgebaut T51 in Antwort auf eine Selektion T5 oder T9 durch die Terminaleinrichtung 100. In Schritt T5 wird das Weiterleitungsendgerät 200 als Kommunikationspartner selektiert und in Schritt T9 eine Transaktionsapplikation (durch Angabe der AID). Die Netzwerkverbindung rechtzeitig, also vor dem Empfang von Transaktionsdaten, die einer transaktionsabhängigen Antwort bedürfen, aufzubauen, erleichtert die Einhaltung der vorgegebenen Wartezeiten bei der Bereitstellung von Antworten (A-APDUs) auf weitergeleitete Transaktionsdaten (K-APDUs).

Das Weiterleitungsendgerät 200 in Teilschritt TS22 (vgl. Fig. 5) von der Servereinrichtung 300 mit Transaktionsinitialisierungsdaten ausgestattet. Diese können dem Weiterleitungsendgerät 200 dazu dienen, die Schritte T1 bis T8 aus Fig. 6 ohne Rückfrage bei der Servereinrichtung 300, dem Transaktionsendgerät 400 oder dem Datenträger 500 durchzuführen. Auf diese Weise können "timeout"-Fehler vermieden werden.

Als transaktionsunabhängige Transaktionsinitialisierungsdaten könnte das Weiterleitungsendgerät 200 beispielsweise von der Servereinrichtung 300 einen vollständigen Protokollstapel des entsprechenden Kommunikationsprotokolls, welches die Datenkommunikation zwischen dem Weiterleitungsendgerät 200 und der Terminaleinrichtung 100 bestimmt, empfangen. Damit wird das Weiterleitungsendgerät 200 in die Lage versetzt, direkt mit der Terminaleinrichtung 100 zu kommunizieren, insbesondere gemäß der Schritte T2 und T6. In der Regel ist das Weiterleitungsendgerät 200 aber bereits eingerichtet die protokollgemäßen Schritte durchzuführen.

Weitere transaktionsunabhängige Transaktionsinitialisierungsdaten sind der in Schritt T4 übertragene Identifizierer UID und/ oder der in Schritt T8 übertragene ATS-Datensatz. Im Falle eines Typ-B-Datenträgers sind ähnliche Datensätze vorgesehen, beispielsweise im Rahmen eines so genannten ATTRIB-Präfixes, welches ebenfalls Datenträgerparameter und einen Identifizierer umfasst.

Die Servereinrichtung 300 kann dem Weiterleitungsendgerät 200 in Teilschritt TS221 von Fig. 5 die entsprechenden Transaktionsinitialisierungsdaten (UID, ATS) bereitstellen. Diese können von der Servereinrichtung 300 geeignet erzeugt werden, beispielsweise in dem Fall, in dem die Servereinrichtung 300 selbst als Transaktionsendgerät dient - mittels der Applikationsservereinrichtung 340. Auf der anderen Seite, wenn eine Vermittlung der Datenkommunikation an ein Transaktionsendgerät 400 bzw. einen Datenträger 500 über ein Transaktionsendgerät 400 vorgesehen ist, können die Transaktionsinitialisierungsdaten (UID, ATS) der Servereinrichtung 300 durch das Transaktionsendgerät 400 vorab, beispielsweise bei der Registrierung (S1) oder Anmeldung (S2; TS21) des Transaktionsendgeräts 400 bereitgestellt worden sein. D.h. die Servereinrichtung 300 stellt dann dem Weiterleitungsendgerät 200 beispielsweise den UID und ATS des Datenträgers 500 bereit. Das Bereitstellen dieser Transaktionsinitialisierungsdaten kann gegebenenfalls auch bereits in der Registrierungsphase (Schritt S1) vorgenommen werden. Dies gilt insbesondere dann, wenn zu diesem Zeitpunkt aus Sicht eines sich registrierenden Weiterleitungsendgeräts 200 bereits feststeht, mittels welchen Transaktionsendgeräts 400 eine spätere Transaktion unter Weiterleitung von Transaktionsdaten durch das Weiterleitungsendgerät 200 stattfinden soll.

Optional können, wie in Schritt TS222 von Fig. 5 angedeutet, dem Weiterleitungsendgerät 200 während der Anmeldung auch bereits transaktionsabhängige Transaktionsinitialisierungsdaten durch die Servereinrichtung 300 bereitgestellt werden. Diese betreffen direkt eine nachfolgend auszuführende Transaktionsapplikation, beispielsweise eine mit AID3 bezeichnete Transaktionsapplikation. Eine einfache Ausführungsform transaktionsabhängiger Transaktionsinitialisierungsdaten sind Identifizierer (AIDs) der entsprechenden Applikationen. Diese sind mit Bezug auf Fig. 3 bereits beschrieben worden. Umfasst das Weiterleitungsendgerät 200 beispielsweise in einem entsprechenden Verzeichnis EF_DIR den Applikationsbezeichner AID3, so bedarf es, wenn die Terminaleinrichtung 100 zu Beginn einer an die Initialisierungsphase anschließenden Transaktionsphase (vgl. Fig. 6, Schritte T9, T10) eine Applikation auswählt, keiner Rückfrage des Weiterleitungsendgeräts bei der Servereinrichtung 300. Das Weiterleitungsendgerät 200 bestätigt die Selektion der Applikation T9 mit einer einfachen positiven Antwort T10 "ok". Diese Antwort einer Transaktionsapplikation auf eine Selektion ist weitgehend transaktionsunabhängig. Durch diese Ausgestaltung gewinnt das Weiterleitungsendgerät Zeit, um die Netzwerkverbindung aufzubauen T51 in Antwort auf die Applikationsselektion T9. Erst die weiteren Transaktionsdaten der Phase A bedürfen einer transaktionsabhängigen Antwort der Transaktionseinheit und somit einer Weiterleitung. Für die wenigen Ausnahmefälle, in denen das Weiterleitungsendgerät 200 die Selektion T9 nicht einfach quittieren sondern weiterleiten soll, kann das Weiterleitungsendgerät 200 mit Hilfe der Transaktionsinitialisierungsdaten entsprechend instruiert werden.

Wird auf ein Bereitstellen von transaktionsabhängigen Transaktionsinitialisierungsdaten in Schritt S2 verzichtet, können dem Teilschritt TS222 entsprechende Maßnahmen zu einem späteren Zeitpunkt nachgeholt werden, wie dies in Fig. 6 mit Bezug auf die Schritte T9' bis T12' veranschaulicht wird. Möchte die Terminaleinrichtung in Schritt T9' eine Applikation AID5 auswählen, zu welcher das Weiterleitungsendgerät 200 bisher keinen Bezeichnereintrag aufweist, leitet dieses das empfangene Kommando in Schritt T10' an die Servereinrichtung 300 weiter. Das heißt, das Weiterleitungsendgerät 200 ist allgemein eingerichtet, eine eine Transaktionsapplikation betreffende Identifikationsinformation an die Servereinrichtung 300 weiterzuleiten, hier das von der Terminaleinrichtung 100 empfangene SELECT(AID5)-Kommando. Das Weiterleitungsendgerät 200 ist auch eingerichtet, transaktionsabhängigen Transaktionsinitialisierungsdaten bei der Servereinrichtung 300 anzufordern. Das Weiterleiten des SELECT(AID5)-Kommandos bedeutet gleichzeitig ein Anfordern der seitens des Weiterleitungsendgeräts 200 benötigten Transaktionsinitialisierungsdaten zum Benantworten des Kommandos.

Die Servereinrichtung 300 liefert, vergleichbar zum vorstehend beschriebenen, entsprechende Transaktionsinitialisierungsdaten nun in Schritt T11' nach, welche das Weiterleitungsendgerät 200 in gewünschter Weise schließlich in Schritt T12' an die Terminaleinrichtung 100 weiterleitet.

Als weitere transaktionsabhängige Transaktionsinitialisierungsdaten könnte die Servereinrichtung 300 dem Weiterleitungsendgerät 200, beispielsweise in den Schritten TS222 (vgl. Fig. 5) oder T11' (vgl. Fig. 6), zusätzlich ausführbare Anteile der entsprechenden Transaktionsapplikation bereitstellen. Auf diese Weise kann nachfolgend das Ausführen der Transaktion beschleunigt werden, da einzelne Anteile der Transaktionsapplikation in dem Weiterleitungsendgerät 200 selbst ausgeführt werden können und dementsprechend weniger Daten zwischen verschiedenen Transaktionsgeräten weitergeleitet werden müssen. Sicherheitsrelevante Anteile einer entsprechenden Transaktionsapplikation werden allerdings vorzugsweise stets in der Servereinrichtung 300, d.h. der Applikationsservereinrichtung 330, bzw. dem Transaktionsendgerät 400 oder dem damit gegebenenfalls verbundenen Datenträger 500 durchgeführt.

Letzteres ist jedoch nicht die bevorzugte Ausgestaltung, da der eigentliche Transaktionsablauf für alle Beteiligten, also auch für die Transaktionseinheit soweit wie möglich unverändert bleiben soll. Transaktionsdaten werden demnach immer weiter geleitet und erst entfernt in der Transaktionseinheit abgearbeitet bzw. beantwortet.

Das Bereitstellen von transaktionsabhängigen Transaktionsinitialisierungsdaten, insbesondere ein Installieren von ausführbaren Anteilen einer Transaktionsapplikation in dem Weiterleitungsendgerät 200 durch die Servereinrichtung 300, kann von einer Zustimmung eines Nutzers des Weiterleitungsendgeräts 200 abhängig gemacht werden. Alternativ oder abhängig von der Art der zu installierenden Transaktionsinitialisierungsdaten kann aber auch eine automatische Installation vorgesehen sein, die keiner Nutzerinteraktion bedarf.

Seitens eines sich in Schritt S2 anmeldenden Transaktionsendgeräts 400 können Vorgaben gemacht werden, welche eine anstehende, durch das Weiterleitungsendgerät weitergeleitete Transaktion betreffen. Beispielsweise kann abhängig von der Transaktion oder der Identität des Weiterleitungsendgeräts ein Zugriff auf eine elektronische Börse auf dem Transaktionsendgerät 400 verboten oder in geeigneter Weise limitiert werden. Andere Vorgaben sind möglich.

Mit Bezug auf die Figuren 6 und 7 werden nachfolgend einzelne Schritte und verschiedene Ausführungsformen des Transaktionsverfahrens im Rahmen des Schritts S3 aus Fig. 5, d.h. im Rahmen der eigentlichen Transaktion mit der Terminaleinrichtung 100, beschrieben.

Während der bereits vorstehend mit Bezug auf die Schritte T1 bis T8 beschriebenen Initialisierungsphase zum Aufbau einer Datenkommunikation kann das Weiterleitungsendgerät 200 der Terminaleinrichtung 100 eine Weiterleitungsinformation WLI übertragen. Damit zeigt das Weiterleitungsendgerät 200 der Terminaleinrichtung 100 an, dass es eingerichtet ist, Transaktionsdaten, insbesondere Transaktionskommandos in Form von APDUs, an eine entfernte Transaktionseinheit 300,400 oder 500 weiterzuleiten. Das Weiterleiten wird in dem Weiterleitungsendgerät 200 durch die Weiterleitungsapplikation 280 unterstützt.

Die Weiterleitungsinformation wird vorzugsweise in Form der Transaktionsinitialisierungsdaten UID, ATS an die Terminaleinrichtung 100 übertragen. Diese Transaktionsinitialisierungsdaten hat das Weiterleitungsendgerät 200 zuvor (vgl. Teilschritt TS22; Fig. 5) von der Servereinrichtung 300 empfangen. Die Weiterleitungsinformation WLI kann beispielsweise mittels des UID derart übertragen werden, dass ein vorgegebener, der Terminaleinrichtung 100 bekannter Nummerbereich von UIDs für solche Weiterleitungsendgeräte 200 vorbehalten ist, die eine Weiterleitung von Transaktionsdaten unterstützen. Die Servereinrichtung 300 kann somit dem Weiterleitungsendgerät 200 in Teilschritt TS22 eine derartige "Weiterleitungs-UID" zuordnen. Das Weiterleitungsendgerät 200 gibt dann in Schritt T4 anstelle seiner eigenen gerätespezifischen UID die "Weiterleitungs-UID" an. Auf diese Weise kann die Weiterleitungsinformation WLI in effektiver Weise und ohne die Notwendigkeit einer Protokollanpassung oder -veränderung an die Terminaleinrichtung 100 übertragen werden.

Gemäß einer alternativen Ausführungsform kann die Weiterleitungsinformation WLI auch, wie mit Bezug auf Schritt T8 angedeutet, mittels des ATS an die Terminaleinrichtung 100 übertragen werden, beispielsweise mit Hilfe der vorstehend beschriebenen "historical bytes".

Die Weiterleitungsinformation WLI kann von dem Weiterleitungsendgerät 200 aber auch zu einem anderen Zeitpunkt, beispielsweise nach Abschluss der Initialisierungsphase und auf andere geeignete Weise, beispielsweise mittels eines eigens dafür definierten Kommandos, an die Terminaleinrichtung 100 übertragen werden. Dazu könnte die Terminaleinrichtung 100 beispielsweise vor Beginn der eigentlichen Datenkommunikation, nach Schritt T8, ein Kommando an das Weiterleitungsendgerät 200 senden, welches einer Abfrage der Weiterleitungsfähigkeit des Weiterleitungsendgeräts 200 dient.

Mittels des ATS können, unabhängig von der Weiterleitungsinformation WLI, die nachfolgende Datenkommunikation bestimmende Parameter seitens des Weiterleitungsendgeräts 200 eingestellt werden. Da das Weiterleitungsendgerät 200 die ATS-Daten als Transaktionsinitialisierungsdaten zuvor von der Servereinrichtung 300 erhält, obliegt es demnach der Servereinrichtung 300, geeignete Parameter für eine nachfolgende Transaktion einzustellen. Dies betrifft insbesondere Angaben über die maximale Zeit, welche die Terminaleinrichtung 100 nach Aussenden eines Kommandos auf die Antwort des Weiterleitungsendgeräts 200 zu warten hat. Ein entsprechender Parameter, beispielsweise der vorstehend beschriebene ATS-Parameter "FWI" ("frame waiting integer") kann seitens der Servereinrichtung 300 so hoch eingestellt werden, dass nicht aufgrund der Weiterleitung von Transaktionsdaten an dieser Stelle vermeidbare Fehler eintreten. Die zulässige Antwortzeit des Weiterleitungsendgeräts 200 gegenüber der Terminaleinrichtung 100 kann also seitens der Servereinrichtung 300 angehoben werden.

In einem Schritt T81 erkennt die Terminaleinrichtung anhand der empfangenen Weiterleitungsinformation, dass der lokal (im Nahbereich) angeordnete, vermeintliche Transaktionspartner eine weiterleitende Einheit ist. Sie kann anhand der Weiterleitungsinformation unterscheiden zwischen weiterleitenden Einheiten und lokalen Transaktionseinheiten. Sie erkennt also anhand der Weiterleitungsinformation, dass das lokal angeordnete Gerät die Transaktion nicht selbst ausführen wird. Darauf reagiert die Terminaleinrichtung 100 mit angepassten oder zusätzlichen Vorbereitungsschritten für die Transaktion.

Zunächst entscheidet die Terminaleinrichtung 100, ob sie die Transaktionen durchführen möchte. Hat die Terminaleinrichtung 100 beispielsweise als Sicherheitsvorgabe gespeichert, dass ihr (oder der aktuelle) Transaktionstyp nur mit lokalen Transaktionseinheiten ausgeführt werden darf, setzt sie die Transaktion nicht fort. Vorliegend entscheidet sich die Terminaleinrichtung die Transaktion durchzuführen. Eine andere Sicherheitsvorgabe schreibt der Terminaleinrichtung vor, den Maximalbetrag (Transaktionslimit) auf einen geringeren Wert zu setzen als er für lokale Transaktionen.

Abweichend vom Verhalten der herkömmlichen Terminaleinrichtungen erkennt die vorliegende Terminaleinrichtung 100 eine Weiterleitung und führt die Transaktion dennoch durch anstatt sie abzubrechen oder anderweitig ungültig zu machen. Eventuell in der Terminaleinrichtung vorhandene weitere Abwehr- und/ oder Erkennungsmechanismen für Weiterleitungen können dann abgeschaltet werden. Bekannte Ansätze sind in diesem Zusammenhang Laufzeitmessungen, Abstandsmessung oder speziell angepasste Transaktionsprotokolle.

Als besonders wichtiger Vorbereitungsschritt erfolgt ein Anpassen des Kommunikationsparameters Wartezeit für den Austausch der Transaktionsdaten. Die Wartezeit könnte auch in zusätzlichen Kommunikationsschritten auf Anfrage des Weiterleitungsendgerätes erhöht werden, soll aber hier bei erkannter Weiterleitung in der Terminaleinrichtung automatisch und somit schneller angepasst werden.

Im gezeigten Beispiel von Figur 6 wird die Weiterleitungsinformation in den Übertragungsprotokolldaten übertragen. Sie ist transaktionsunabhängig, d.h. sie gilt für alle Transaktionstypen. Bevorzugt wird die Weiterleitungsinformation jedoch für einen selektierten Transaktionstyp übertragen. Dies wäre beispielsweise möglich in Schritt T10. Entweder in den Übertragungsprotokolldaten des Schrittes T10, in denen die Transaktionsdaten übertragen werden, oder in den Transaktionsdaten selbst (Antwort: "ok") kann die Weiterleitungsinformation übermittelt werden. Beispielsweise erlaubt die ISO 7816-4 leicht unterschiedlich codierte Antworten, die alle einer positiven Quittung "ok" entsprechen.

Mit Bezug auf Fig. 7 ist mit den Schritten T11 bis T18 das Durchführen einer Transaktion zwischen der Terminaleinrichtung 100 und dem Datenträger 500 veranschaulicht. Die dazugehörigen Transaktionsdaten, Kommando- und Antwort-APDUs, werden dabei über das Weiterleitungsendgerät 200 zwischen der Terminaleinrichtung 100 und der Servereinrichtung 300 weitergeleitet (Schritte T12, T18). Die Servereinrichtung 300 ihrerseits vermittelt mittels der Vermittlungsservereinrichtung 340 eine Datenkommunikationsverbindung zwischen dem Weiterleitungsendgerät 200 und dem Transaktionsendgerät 400 (Schritte T13, T17). Das Transaktionsendgerät 400 bedient sich in dieser Ausführungsform des Datenträgers 500 zum Durchführen der Transaktionsapplikation (AID3). Dabei operiert das Transaktionsendgerät 400 in gewisser Weise als zweites Weiterleitungsendgerät, indem es die Kommando-APDUs an den Datenträger 500 in Schritt T14 weiterleitet und in Schritt T15 empfangene Antwort-APDUs in Schritt T16 wieder an die Servereinrichtung 300 weiterleitet.

Alternativ (nicht gezeigt), in dem Fall, in dem das Transaktionsendgerät 400 eine Transaktionsapplikation, beispielsweise AID2, selbst ausführbar umfasst (vgl. Fig. 4), können die Schritte T14 und T15 unterbleiben, da die Transaktionsapplikation direkt in dem Transaktionsendgerät 400 ausgeführt werden kann. Der restliche Ablauf bleibt wie beschrieben. Insbesondere bleibt es für die restlichen Transaktionsgeräte transparent, ob das Transaktionsendgerät 400 selbst oder mit Hilfe des Datenträgers 500 die Transaktionsapplikation ausführt.

Nicht gezeigt sind wiederum ebenfalls die Alternativen, in welchen das Weiterleitungsendgerät 200 die Transaktionsdaten ohne Einbindung des Servers 300 an die und von der Transaktionseinheit 400, 500 weiterleitet.

Gemäß einer weiteren Ausführungsform, welche in Fig. 7 mit Bezug auf die Schritte T13' bis T16' beschrieben ist, kann ein Ausführen einer Transaktionsapplikation, beispielsweise AID5, auch in der Servereinrichtung 300 mittels der Applikationsservereinrichtung 330 durchgeführt werden. Hier sind ein separates Transaktionsgerät 400 und insbesondere ein Datenträger 500 verzichtbar bzw. nicht eingebunden. Die Applikationsservereinrichtung 330 stellt vorzugsweise eine Mehrzahl von Transaktionsapplikationen AID4, AID5 (vgl. Fig. 1) bereit und kann dadurch verschiedenste Transaktionen gegenüber verschiedensten Terminaleinrichtungen 100 unterstützen. Am elegantesten ist es, wenn die Applikationsservereinrichtung 330 eine Vielzahl von herkömmlichen portablen Datenträgern 350, für eine oder mehrere Transaktionstypen, aufweist, die entsprechend über ein kontaktloses Lesegerät (Aufbau und Funktion ähnlich wie in Fig. 4) oder mehrere kontaktlose Lesegeräte als Transaktionseinheiten verwendet werden.

Sollte sich bei der Weiterleitung oder Verarbeitung der Transaktionsdaten in der Servereinrichtung 300 oder dem Transaktionsendgerät 400 eine Zeitverzögerung ergeben, welche einen Fehler in der Datenkommunikation zwischen dem Weiterleitungsendgerät 200 und der Terminaleinrichtung 100 zur Folge hätte, so kann es vorgesehen sein, dass das Weiterleitungsendgerät 200 eine entsprechende Anfrage nach Verlängerung des Antwort-Intervalls, innerhalb dessen ein Antwort-Kommando bei der Terminaleinrichtung 100 eingegangen ist, an die Terminaleinrichtung 100 sendet (in Fig. 7 nicht gezeigt). Gemäß dem ISO/IEC 14443-Protokoll kann dies mittels einer "frame-waiting-time-extension"-Anfrage (FWX) geschehen.

In den vorstehend beschriebenen Ausführungsformen des Transaktionsverfahrens ist das Weiterleitungsendgerät 200 jeweils eingerichtet, eine Transaktionsinformation, d.h. eine die Transaktionsapplikation betreffende Identifikationsinformation, an die Servereinrichtung 300 weiterzuleiten. Eine solche Identifikationsinformation kann beispielsweise ein Applikationsbezeichner (AID; AFI, "application family identifier" für Typ-B-Datenträger) oder dergleichen sein. Auf diese Weise wird das Weiterleitungsendgerät 200 multiapplikationsfähig, ohne selbst eine einzige Transaktionsapplikation auf dem Weiterleitungsendgerät 200 ausführbar installiert bereitzustellen. Anhand der Identifikationsinformation erkennt die Servereinrichtung 300, welche Transaktionsapplikation gefordert ist. Falls diese durch die Applikationsservereinrichtung 330 unterstützt wird, kann sie bereits dort ausgeführt werden. Im anderen Fall kann die Vermittlungsservereinrichtung 340 entsprechende Transaktionsdaten an ein solches Transaktionsendgerät 400 weiterleiten, welches, eventuell mittels eines Datenträgers 500, die entsprechende Transaktionsapplikation unterstützt. Die Auswertung der Identifikationsinformation und anschließende Verarbeitung obliegt, wie beschrieben, der Servereinrichtung 300.

Wie mit Bezug auf Schritt T12 in Fig. 7 angedeutet, kann es vorgesehen sein, dass das Weiterleitungsendgerät 200 eine Auswahlinformation AI zum Auswählen eines vorgegebenen Transaktionsendgeräts 400 an die Servereinrichtung 300 sendet. Die Auswahlinformation AI wird von der Vermittlungsservereinrichtung 340 verarbeitet und bei der Vermittlung des entsprechenden, seitens des Weiterleitungsendgeräts 200 ausgewählten Transaktionsendgeräts 400 berücksichtigt. Es ist auch möglich, dass eine entsprechende Auswahlinformation AI bereits in der Registrierungsphase (S1; Fig. 5) oder der Anmeldephase (S2; Fig.5) an die Servereinrichtung 300 übertragen wird. Auf diese Weise kann ein Nutzer des Weiterleitungsendgeräts 200, vorzugsweise transaktionsabhängig, vorgeben, über welches Transaktionsendgerät 400 eine bestimmte Transaktion jeweils durchgeführt werden soll. Die Auswahlinformation AI kann aber so gestaltet sein, dass sie dem Weiterleitungsendgerät 200 alternativ den Aufbau einer direkten Verbindung zur Transaktionseinheit ermöglicht (ohne Einbindung der Servereinrichtung).

Wie mit Bezug auf Schritt T13 in Fig. 7 und Schritt T91 in Figur 6 gezeigt, kann ein Transaktionsendpunktsignal TES an die Transaktionseinheit übertragen werden. Der zur Übertragung des Transaktionsendpunktsignal TES in Schritt T13 alternative Schritt 91 wird später beschrieben.

In Schritt T13 überträgt die Servereinrichtung 300 dem Transaktionsendgerät 400 ein Transaktionsendpunktsignal TES. Anhand eines solchen Transaktionsendpunktsignals TES kann das Transaktionsendgerät 400 erkennen, dass es als Transaktionsendpunkt einer Kette von Transaktionsgeräten 200,300, 400 operiert. Die Rolle des Transaktionsendpunktsignals ist also ähnlich zu der einer Weiterleitungsinformation. Zum Erkennen und weiteren Verarbeiten des Transaktionsendpunktsignals TES umfasst das Transaktionsendgerät 400 eine Weiterleitungserkennung 420 auf einem Sicherheitselement SE 450 (vgl. Fig. 4).

Das Erkennen des Operierens als Transaktionsendpunkt in einer weitergeleiteten Transaktion ist aus verschiedenen Gründen vorteilhaft. Beispielsweise wird eine bestimmte Transaktion, welche in beschriebener Weise über eine kontaktlose Datenkommunikation lokal durchgeführt wird, für den Nutzer eines Transaktionsendgeräts 400 regelmäßig nicht erkennbar sein. Es wird vielmehr in den üblichen Transaktionssystemen für Nahbereichslösungen davon ausgegangen, dass der Nutzer seinen tragbaren Datenträger 500 oder sein Endgerät 400 mit dem Sicherheitselement 450 in den Nahbereich des Transaktionsterminals bringt und somit die Transaktion auslöst. Auch in dem vorliegenden Systemansatz bedürfte es dazu keiner weiteren Interaktion des Nutzers, vorausgesetzt das Transaktionsendgerät 400 ist online und zuvor bei der Servereinrichtung 300 ordnungsgemäß registriert und angemeldet worden.

Es kann daher vorgesehen werden, dass die Weiterleitungserkennung 420 eine Nutzerfreigabe für die weitergeleitete Transaktion, die bei lokaler (herkömmlicher) Ausführung keiner Nutzerfreigabe bedarf, anfordert. Ferner kann vorgesehen sein für Transaktionstypen mit / oder ohne herkömmlich vorgesehener Nutzerfreigabe eine Weiterleitungs-Zustimmung einzuholen, mit welcher der Nutzer explizit der Weiterleitung der Transaktionsdaten zustimmt. Der Nutzer des Transaktionsendgeräts 400 muss einem Durchführen der Transaktion aktiv zustimmen, bevor diese ausgeführt wird, beispielsweise durch Bedienung einer Taste oder dergleichen. Es kann aber auch vorgesehen sein, dass die Transaktion immer dann durchgeführt wird, wenn der Nutzer des Transaktionsendgeräts 400 die ausgelöst durch das Transaktionsendpunktsignal TES dem Nutzer angekündigte Transaktion nicht aktiv unterbricht (passive Freigabe).

Das Transaktionsendpunktsignal TES kann zusätzlich Informationen umfassen, welche angeben, über welche weiteren Transaktionsgeräte 200, 300 die Transaktion durchgeführt werden soll. Insbesondere kann das Transaktionsendpunktsignal TES Authentisierungsinformationen betreffend die Servereinrichtung 300 oder das Weiterleitungsendgerät 200 umfassen. Die Transaktionseinheit 350,450,500 kann daraufhin die Servereinrichtung 300 bzw. das Weiterleitungsendgerät 200 authentifizieren. Eine entsprechende Authentifizierungsmeldung kann einem Nutzer des Transaktionsendgeräts 400 angezeigt werden. Dieser kann dann beispielsweise abhängig von der Identität des jeweiligen Geräts einer Transaktion zustimmen oder nicht. Es ist auch möglich, dass in dem Transaktionsendgerät 400 Voreinstellungen getroffen sind, welche festlegen, dass bei Empfang eines Transaktionsendpunktsignals TES eine Benachrichtigung des Nutzers unterbleiben kann, wenn die Transaktion über anhand des Transaktionsendpunktsignals TES authentifizierte, als zulässig voreingestellte Transaktionsgeräte weitergeleitet worden ist.

Auch die Transaktionseinheit kann Abwehrmaßnahmen gegen Weiterleitungsangriffe umfassen. Bei Erkennung einer durch ein Transaktionsendpunktsignal TES angezeigten weitergeleiteten Transaktion, werden diese (teils sehr aufwändigen) Abwehrmaßnahmen deaktiviert.

Zudem kann die Transaktionseinheit bei Vorliegen eines Transaktionsendpunktsignal TES Sicherheitsvorgaben für weitergeleitete Transaktion prüfen. Gegebenfalls verweigert die Transaktionseinheit entsprechend eine solche weitergeleitete Transaktion. Vorzugsweise führt sie aber vorbereitend auf die Transaktion folgende Anpassungen aus. Die Priorität der Transaktionsapplikation zur Ausführung auf der Transaktionseinheit wird erhöht. Somit wird die Antwortzeit der Transaktionseinheit optimiert. Beispielsweise kann eine Prioritätsstufe (in dem Betriebssystem der Transaktionseinheit) erhöht werden.

Ein Trarisaktionsendpunktsignal TES kann wie in Figur 7 gezeigt von der Servereinrichtung 300 erzeugt werden. Alternativ wird das Transaktionsendpunktsignal TES in dem Weiterleitungsendgerät 200 erzeugt. Allgemein wird das Transaktionsendpunktsignal als Daten einer Anwendungsschicht übertragen und von der Transaktionseinheit vorzugsweise vor den Transaktionsdaten empfangen.

Fig. 6 zeigt in eine besonders vorteilhafte Ausgestaltung, in welcher das Weiterleitungsendgerät 200 das erzeugte Transaktionsendpunktsignal TES in Antwort auf ein erstes Kommando T9 innerhalb der Transaktion erzeugt und in Schritt 91 an die Transaktionseinheit sendet. Da das Weiterleitungsendgerät 200 auf das erste empfangene Kommando T9 ohne Weiterleitung direkt antwortet T10, gewinnt die Transaktionseinheit 350, 450, 500 nach dem Erkennen des empfangenen Transaktionsendpunktsignal TES Zeit, die entsprechenden Vorbereitungsschritte durchzuführen.

Mit Schritt T91 wird, nachdem der Transaktionstyp und somit der Transaktionspartner (in dem Weiterleitungsendgerät 200 oder der Servereinheit 300) bestimmbar ist die Kommunikationsverbindung zu der Transaktionseinheit 350,450,500 aufgebaut. Wie durch Schritt T92 in Figur 6 angedeutet, erkennt der Datenträger 500 das Transaktionsendpunktsignal TES und reagiert daraufhin wie zuvor beschrieben.

Das Transaktionsendpunktsignal kann in der Form eines modifizierten Transaktionsauswahlsignals an die Transaktionseinrichtung übertragen werden. Aus den nicht weitergeleiteten Transaktionsdaten "Select AID3" kann ein modifiziertes Auswahlsignal "Select AID-TES-3" erzeugt werden, welches an die Transaktionseinheit in Schritt T91 übertragen wird. Die Weiterleitungserkennung wird durch diese K-APDU selektiert, führt die Vorbereitungsschritte durch und selektiert (intern) anschließend die Transaktionsapplikation AID3 auf der Transaktionseinheit.

Weiter alternativ könnte das Transaktionsendpunktsignal TES zwar auch in der Weiterleitungsapplikation 480, die in dem Transaktionsendgerät 400 oder in dessen Sicherheitselement 450 angeordnet ist, erzeugt werden. Diese Variante ist jedoch weniger sicher und kann technisch komplexer sein.

Die Weiterleitungserkennung 420 ist vorzugsweise ein separater (Software-) Bestandteil des Sicherheitselements 450 oder des portablen Datenträgers 500. Das oben ausführlicher beschriebene veränderte Verhalten der Transaktionseinheit nach dem Erkennen eines Transaktionsendpunktsignals kann man auch wie folgt beschreiben. Wenn die Transaktionseinheit ein Transaktionsendpunktsignal empfängt, schaltet sie in einen Weiterleitungsmodus um und führt die (unveränderte) Transaktionsapplikation in diesem Modus aus. Somit kann die herkömmliche Transaktionsapplikation 470 in der Transaktionseinheit 450 oder im tragbaren Datenträger 500 unverändert erhalten bleiben.

## Patentansprüche

1. System (10) umfassend
- eine im Nahbereich kontaktlos kommunizierende Terminaleinrichtung (100) zum Durchführen von Transaktionen mit im Nahbereich angeordneten Transaktionspartnern,
- eine Transaktionseinheit als Transaktionspartner für die Terminaleinrichtung (100), und
- ein Endgerät (200), welches eingerichtet ist, eine im Nahbereich kontaktlose Datenkommunikation mit der Terminaleinrichtung (100) aufzubauen, **dadurch gekennzeichnet, dass**
die Transaktionseinheit (350, 450, 500) eine entfernt von der Terminaleinrichtung angeordnete Transaktionseinheit (350, 450, 500) ist,
das Endgerät (200) ein Weiterleitungsendgerät (200) ist, welches eingerichtet ist, von der Terminaleinrichtung (100) empfangene Transaktionsdaten an die entfernt angeordnete Transaktionseinheit (350, 450, 500) weiterzuleiten, und das System weiter umfasst:
- eine Servereinrichtung (300), welche dem Weiterleitungsendgerät (200) die Transaktionseinheit (350,450,500) als Transaktionspartner für die Terminaleinrichtung (100) abhängig vom Typ der Transaktion vermittelt.

2. System (10) nach Anspruch 1 **dadurch gekennzeichnet, dass** die Servereinrichtung (300) eine von einer Vielzahl von Transaktionseinheiten (350, 450, 500) auswählt.

3. System (10) nach Anspruch 1 oder 2 **dadurch gekennzeichnet, dass** die Servereinrichtung (300) für Transaktionseinheiten (350, 450, 500) speichert, welcher Transaktionstyp unterstützt wird.

4. System (10) nach einem der Ansprüche 1 bis 3 **dadurch gekennzeichnet, dass** die Servereinrichtung (300) für Transaktionseinheiten (350, 450, 500) speichert, mit welcher Adresse eine Datenkommunikationsverbindung zu der jeweiligen Transaktionseinheit (350,450,500) aufgebaut werden kann.

5. System (10) nach einem der Ansprüche 1 bis 4 **dadurch gekennzeichnet, dass** die Servereinrichtung (300) eingerichtet ist, die Transaktionseinheit (350,450,500) zu vermitteln durch Aufbauen einer Datenkommunikationsverbindung zu der Transaktionseinheit (350,450,500) und Weiterleiten von Transaktionsdaten von dem Weiterleitungsendgerät (200) über die Servereinrichtung (300) zu der Transaktionseinheit (350,450,500).

6. System (10) nach einem der Ansprüche 1 bis 4 **dadurch gekennzeichnet, dass** die Servereinrichtung (300) eingerichtet ist, die Transaktionseinheit (350,450,500) zu vermitteln durch Übertragen einer Datenkommunikationsadresse der Transaktionseinheit (350,450,500) an das Weiterleitungsendgerät (200).

7. System (10) nach einem der Ansprüche 1 bis 6 **dadurch gekennzeichnet, dass** die Servereinrichtung (300) Transaktionseinheiten (350) für unterschiedliche Transaktionstypen umfasst, wobei die weitergeleitete Transaktion mit einer der Transaktionseinheiten (350) der Servereinrichtung durchgeführt wird.

8. System (10) nach einem der Ansprüche 1 bis 7 **dadurch gekennzeichnet, dass** die Servereinrichtung (300) für Transaktionseinheiten (350, 450,500) speichert, welchen Weiterleitungsendgeräten (200) die Transaktionseinheit (350, 450, 500) vermittelt werden darf.

9. System (10) nach einem der Ansprüche 1 bis 8 **dadurch gekennzeichnet, dass** die Servereinrichtung (300) eingerichtet ist Weiterleitungsendgeräten (200) Transaktionsinitialisierungsdaten bereitzustellen.

10. System (10) nach einem der Ansprüche 1 bis 9 **dadurch gekennzeichnet, dass** die Servereinrichtung (300) eingerichtet ist den Transaktionstyp anhand einer vom Weiterleitungsendgerät (200) empfangenen Information zu bestimmen.

11. System (10) nach einem der Ansprüche 1 bis 10 **dadurch gekennzeichnet, dass** die Servereinrichtung (300) eingerichtet ist den Transaktionstyp anhand einer Positionsinformation, welche die Position des Weiterleitungsendgerätes angibt, zu bestimmen.

12. Servereinrichtung (300) zum Vermitteln einer Transaktion zwischen einer Transaktionseinheit (350, 450, 500) und einer kontaktlos im Nahbereich kommunizierenden Terminaleinrichtung (100) über ein Weiterleitungsendgerät (200), **dadurch gekennzeichnet, dass** die Servereinrichtung (300) eingerichtet ist, eine zum Durchführen der Transaktion notwendige Datenkommunikationsverbindung zwischen dem Weiterleitungsendgerät (200) und der Transaktionseinheit (350, 450, 500) abhängig vom Transaktionstyp an unterschiedliche Transaktionseinheiten zu vermitteln.

13. Servereinrichtung (300) nach Anspruch 12 angepasst für ein System nach einem der Ansprüche 1 bis 11.

14. Weiterleitungsendgerät (200) zum Unterstützen einer Transaktion zwischen einer im Nahbereich kontaktlos kommunizierenden Terminaleinrichtung (100) und einer Transaktionseinheit (350,450,500), wobei das Weiterleitungsendgerät (200) eine Datenkommunikationsschnittstelle (210) zur im Nahbereich kontaktlosen Datenkommunikation mit der Terminaleinrichtung (100) und eine Datenkommunikationsschnittstelle zur Datenkommunikation mit einer Servereinrichtung (300) umfasst, **dadurch gekennzeichnet, dass** das Weiterleitungsendgerät (200) eingerichtet ist, transaktionsabhängige Transaktionsinitialisierungsdaten von dem Server (300) zu empfangen und die empfangenen Transaktionsinitialisierungsdaten für eine weitergeleitete Transaktion zwischen der Terminaleinrichtung (100) und der Transaktionseinheit (350,450,500) zu verwenden.

15. Weiterleitungsendgerät (200) nach Anspruch 14 eingerichtet für ein System nach Anspruch 1 bis 11.

## Claims

1. A system (10) comprising
- a terminal device (100) contactlessly communicating in the near zone for carrying out transactions with transaction partners disposed in the near zone,
- a transaction unit as a transaction partner for the terminal device (100), and
- an end device (200) which is arranged to set up an in the near zone contactless data communication with the terminal device (100), **characterized in that**
the transaction unit (350, 450, 500) is a transaction unit (350, 450, 500) remotely disposed from the terminal device,
the end device (200) is a relay end device (200) which is arranged to relay transaction data received from the terminal device (100) to the remotely disposed transaction unit (350, 450, 500), and the system further comprises:
- a server device (300) which switches the relay end device (200) with the transaction unit (350, 450, 500) as a transaction partner for the terminal device (100), depending on the type of transaction.

2. The system (10) according to claim 1, **characterized in that** the server device (300) chooses one of a multiplicity of transaction units (350, 450, 500).

3. The system (10) according to claim 1 or 2, **characterized in that** the server device (300) stores for transaction units (350, 450, 500) which transaction type is supported.

4. The system (10) according to any of claims 1 to 3, **characterized in that** the server device (300) stores for transaction units (350, 450, 500) with which address a data communication connection to the respective transaction unit (350, 450, 500) can be set up.

5. The system (10) according to any of claims 1 to 4, **characterized in that** the server device (300) is arranged to switch the transaction unit (350, 450, 500) by setting up a data communication connection to the transaction unit (350, 450, 500) and relaying transaction data from the relay end device (200) via the server device (300) to the transaction unit (350, 450, 500).

6. The system (10) according to any of claims 1 to 4, **characterized in that** the server device (300) is arranged to switch the transaction unit (350, 450, 500) by transmitting a data communication address of the transaction unit (350, 450, 500) to the relay end device (200).

7. The system (10) according to any of claims 1 to 6, **characterized in that** the server device (300) comprises transaction units (350) for different transaction types, wherein the relayed transaction is carried out with one of the transaction units (350) of the server device.

8. The system (10) according to any of claims 1 to 7, **characterized in that** the server device (300) stores for transaction units (350, 450, 500) with which relay end devices (200) the transaction unit (350, 450, 500) may be switched.

9. The system (10) according to any of claims 1 to 8, **characterized in that** the server device (300) is arranged to make available to relay end devices (200) transaction initialization data.

10. The system (10) according to any of claims 1 to 9, **characterized in that** the server device (300) is arranged to determine the transaction type with the help of information received from the relay end device (200).

11. The system (10) according to any of claims 1 to 10, **characterized in that** the server device (300) is arranged to determine the transaction type with the help of position information which indicates the position of the relay end device.

12. A server device (300) for switching via a relay end device (200) a transaction between a transaction unit (350, 450, 500) and a terminal device (100) communicating contactlessly in the near zone, **characterized in that** the server device (300) is arranged to switch a data communication connection between the relay end device (200) and the transaction unit (350, 450, 500), which connection is necessary for carrying out the transaction, with different transaction units, depending on the transaction type.

13. The server device (300) according to claim 12 adapted to a system according to any of claims 1 to 11.

14. A relay end device (200) for supporting a transaction between a terminal device (100) communicating contactlessly in the near zone and a transaction unit (350, 450, 500), wherein the relay end device (200) comprises a data communication interface (210) for the data communication, which is contactless in the near zone, with the terminal device (100) and a data communication interface for the data communication with a server device (300), **characterized in that** the relay end device (200) is arranged to receive transaction-dependent transaction initialization data from the server (300) and to employ the received transaction initialization data for a relayed transaction between the terminal device (100) and the transaction unit (350, 450, 500).

15. The relay end device (200) according to claim 14 arranged for a system according to claim 1 to 11.

## Revendications

1. Système (10) comprenant
- un équipement terminal (100) communiquant sans contact en champ proche pour la réalisation de transactions avec des partenaires de transaction disposés en champ proche,
- une unité de transaction en tant que partenaire de transaction pour l'équipement terminal (100), et
- un terminal (200) conçu pour établir une communication de données sans contact en champ proche avec l'équipement terminal (100),
**caractérisé en ce que**
l'unité de transaction (350, 450, 500) est une unité de transaction (350, 450,500) disposée de manière éloignée de l'équipement terminal,
le terminal (200) est un terminal de transmission (200) conçu pour transmettre à l'unité de transaction (350, 450, 500), disposée de manière éloignée, des données de transaction reçues par l'équipement terminal (100), et le système comprend en outre :
- un équipement serveur (300) qui procure au terminal de transmission (200) l'unité de transaction (350, 450, 500) en tant que partenaire de transaction pour l'équipement terminal (100) en fonction du type de la transaction.

2. Système (10) selon la revendication 1, **caractérisé en ce que** l'équipement serveur (300) sélectionne une parmi une pluralité d'unités de transaction (350, 450, 500).

3. Système (10) selon la revendication 1 ou 2, **caractérisé en ce que** l'équipement serveur (300) pour unités de transaction (350, 450, 500) mémorise quel type de transaction est soutenu.

4. Système (10) selon une des revendications de 1 à 3, **caractérisé en ce que** l'équipement serveur (300) pour unités de transaction (350, 450, 500) mémorise avec quelle adresse une liaison de communication de données à l'unité de transaction (350, 450, 500) respective peut être établie.

5. Système (10) selon une des revendications de 1 à 4, **caractérisé en ce que** l'équipement serveur (300) est conçu pour procurer l'unité de transaction (350, 450, 500) par établissement d'une liaison de communication de données à l'unité de transaction (350, 450, 500) respective et par transmission de données de transaction du terminal de transmission (200) par l'intermédiaire de l'équipement serveur (300) à l'unité de transaction (350, 450, 500).

6. Système (10) selon une des revendications de 1 à 4, **caractérisé en ce que** l'équipement serveur (300) est conçu pour procurer l'unité de transaction (350, 450, 500) par transfert d'une adresse de communication de l'unité de transaction (350, 450, 500) au terminal de transmission (200).

7. Système (10) selon une des revendications de 1 à 6, **caractérisé en ce que** l'équipement serveur (300) comprend des unités de transaction (350) pour différents types de transactions, la transaction transmise étant réalisée avec une des unités de transaction (350) de l'équipement serveur.

8. Système (10) selon une des revendications de 1 à 7, **caractérisé en ce que** l'équipement serveur (300) pour unités de transaction (350, 450, 500) mémorise à quels terminaux de transmission (200) l'unité de transaction (350, 450, 500) peut être procurée.

9. Système (10) selon une des revendications de 1 à 8, **caractérisé en ce que** l'équipement serveur (300) est conçu pour mettre à disposition de terminaux de transmission (200) des données d'initialisation de transaction.

10. Système (10) selon une des revendications de 1 à 9, **caractérisé en ce que** l'équipement serveur (300) est conçu pour déterminer le type de transaction au moyen d'une information reçue par le terminal de transmission (200).

11. Système (10) selon une des revendications de 1 à 10, **caractérisé en ce que** l'équipement serveur (300) est conçu pour déterminer le type de transaction au moyen d'une information de position qui indique la position du terminal de transmission.

12. Equipement serveur (300) destiné à procurer une transaction entre une unité de transaction (350, 450, 500) et un équipement terminal (100) communiquant sans contact en champ proche, par l'intermédiaire d'un terminal de transmission (200), **caractérisé en ce que** l'équipement serveur (300) est conçu pour procurer, en fonction du type de la transaction, une liaison de communication de données, nécessaire à la réalisation de la transaction, entre le terminal de transmission (200) et l'unité de transaction (350, 450, 500), à différentes unités de transaction.

13. Equipement serveur (300) selon la revendication 12, adapté pour un système selon une des revendications de 1 à 11.

14. Terminal de transmission (200) destiné à soutenir une transaction entre un équipement terminal (100) communiquant sans contact en champ proche et une unité de transaction (350, 450, 500), cependant que le terminal de transmission (200) comprend une interface de communication de données (210) destinée à la communication de données sans contact en champ proche avec l'équipement terminal (100), et une interface de communication de données destinée à la communication de données avec un équipement serveur (300), **caractérisé en ce que** le terminal de transmission (200) est conçu pour recevoir de la part du serveur (300) des données d'initialisation de transaction liées à des transactions et pour utiliser les données d'initialisation de transaction reçues pour une transaction transmise entre l'équipement terminal (100) et l'unité de transaction (350, 450, 500).

15. Terminal de transmission (200) selon la revendication 14, conçu pour un système selon les revendications de 1 à 11.
